# EUROPEAN PATENT APPLICATION

(11) **EP 4 826 771 A1**
(43) Date of publication of application: **21.10.2026**
(21) Application number: 25858277.4
(22) Date of filing: 17.03.2025
(51) Int. Cl.: H01M 4/133, H01M 4/134, H01M 4/587, H01M 10/0525

(54) **SECONDARY BATTERY AND ELECTRICAL DEVICE**

(30) Priority: 30.08.2024 CN 202411215915
(71) Applicant: Contemporary Amperex Technology Co., Limited, Ningde, Fujian 352100 (CN)
(72) Inventor: LI, Yuanyuan, Ningde, Fujian 352100 (CN); LIN, Xieji, Ningde, Fujian 352100 (CN); ZENG, Qinqin, Ningde, Fujian 352100 (CN); SHEN, Rui, Ningde, Fujian 352100 (CN); HE, Libing, Ningde, Fujian 352100 (CN); LIU, Na, Ningde, Fujian 352100 (CN)
(74) Representative: Lorenz Seidler Gossel Part. mbB
(86) International application number: PCT/CN2025/082966
(87) International publication number: WO 2026/045226

(57) **Abstract**

The present disclosure provides a secondary battery and an electrical device. The secondary battery comprises a negative electrode sheet. The negative electrode sheet comprises a negative electrode current collector and a negative electrode film layer formed on at least one surface of the negative electrode current collector. The negative electrode film layer comprises a first region and a second region. The first region is located between the second region and the negative electrode current collector. The first region comprises a first negative electrode active material. The second region comprises a second negative electrode active material. A powder OI value of the second negative electrode active material is less than a powder OI value of the first negative electrode active material. The first negative electrode active material comprises a first artificial graphite having an La(110) of 130-175 nm and an Lc(002) of 30-42 nm.

## Description

### CROSS-REFERENCE TO RELATED APPLICATIONS

This disclosure is based on and claims the priority of Chinese Patent Application No. 202411215915.4, filed on August 30, 2024 and entitled "SECONDARY BATTERY AND ELECTRIC APPARATUS", which is incorporated herein by reference in its entirety.

### TECHNICAL FIELD

This disclosure relates to the field of battery technologies, and in particular, to a secondary battery and an electric apparatus.

### BACKGROUND

In recent years, with the application range of secondary batteries becoming increasingly wide, secondary batteries are widely used in energy storage power systems such as hydraulic, thermal, wind, and solar power stations, as well as in various fields such as electric tools, electric bicycles, electric motorcycles, electric vehicles, and aerospace. With the rapid development of secondary batteries, higher requirements are imposed on their energy density, kinetic performance, and the like.

### SUMMARY

This disclosure is made in view of the above issues and is intended to provide a secondary battery and an electric apparatus. The secondary battery of this disclosure has high energy density, excellent kinetic performance, and good cycling performance.

To achieve the above objective, this disclosure provides a secondary battery, including a negative electrode sheet. The negative electrode sheet includes a negative electrode current collector and a negative electrode film layer formed on at least one surface of the negative electrode current collector. The negative electrode film layer includes a first region and a second region. The first region is located between the second region and the negative electrode current collector. The first region includes a first negative electrode active material. The second region includes a second negative electrode active material. A powder OI value of the second negative electrode active material is less than a powder OI value of the first negative electrode active material. The first negative electrode active material includes first artificial graphite, where La(110) of the first artificial graphite is 130 nm to 175 nm, and Lc(002) is 30 nm to 42 nm. La(110) represents a crystallite size along axis a in a (110) crystal plane of the first artificial graphite, and Lc(002) represents a crystallite size along axis c in a (002) crystal plane of the first artificial graphite. Thus, the secondary battery can achieve both high energy density and excellent kinetic performance.

In some embodiments, La(110) of the first artificial graphite is 132 nm to 172 nm, and/or Lc(002) is 30 nm to 36 nm. This helps the secondary battery to achieve high energy density.

In some embodiments, La(110)/Lc(002) is 3.5 to 5.5. This helps to increase the energy density of the secondary battery.

In some embodiments, La(110)/Lc(002) is 4.5 to 5.5. This helps to increase the gram capacity of the first negative electrode active material, and helps to increase the energy density of the secondary battery.

In some embodiments, under conditions of a lithium deintercalation rate of 0.1C and a lithium intercalation rate of 0.05C, a button cell prepared from the first artificial graphite is subjected to a charge-discharge test to obtain charge and discharge curves in a range of 0.005 V to 2.0 V. In the discharge curve, a lithium intercalation plateau is present in a voltage range of 0.005 V to 0.070 V, and a proportion X of a discharge capacity corresponding to the lithium intercalation plateau relative to a total discharge capacity of the button cell is 43% or higher. This allows the first artificial graphite to have high gram capacity and helps to increase the energy density of the secondary battery.

In some embodiments, the proportion X of the discharge capacity corresponding to the lithium intercalation plateau relative to the total discharge capacity of the button cell is 43% to 47%. This allows the first artificial graphite to have high gram capacity and helps to increase the energy density of the secondary battery.

In some embodiments, a gram capacity of the first negative electrode active material is greater than or equal to a gram capacity of the second negative electrode active material. In some embodiments, the gram capacity of the first negative electrode active material is greater than or equal to 359 mAh/g; and/or the gram capacity of the second negative electrode active material is 353 mAh/g to 359 mAh/g. This helps to improve the kinetic performance of the secondary battery and also increases the energy density of the secondary battery. In some embodiments, the gram capacity of the first negative electrode active material is 359 mAh/g to 366 mAh/g; and/or the gram capacity of the second negative electrode active material is 354.6 mAh/g to 356.8 mAh/g.

In some embodiments, a graphitization degree of the first negative electrode active material is greater than a graphitization degree of the second negative electrode active material. In some embodiments, the graphitization degree of the first negative electrode active material is 94.0% to 96.0%; and/or the graphitization degree of the second negative electrode active material is 93.5% to 95.5%. This helps the first negative electrode active material to have high compacted density and gram capacity, and improves the transmission efficiency of active ions in the second negative electrode active material, thereby increasing the energy density and kinetic performance of the secondary battery.

In some embodiments, the graphitization degree of the first negative electrode active material is 94.2% to 95.8%; and/or the graphitization degree of the second negative electrode active material is 93.7% to 95.3%.

In some embodiments, a powder compacted density of the first negative electrode active material under a pressure of 50000 N is greater than a powder compacted density of the second negative electrode active material under a pressure of 50000 N. This helps to increase the energy density of the secondary battery, and improve the kinetic performance of the secondary battery.

In some embodiments, the powder compacted density of the first negative electrode active material under a pressure of 50000 N is 1.95 g/cc to 2.04 g/cc; and/or the powder compacted density of the second negative electrode active material under a pressure of 50000 N is 1.75 g/cc to 1.94 g/cc.

In some embodiments, the first artificial graphite includes secondary particles. This helps to improve the isotropy of the first negative electrode active material, reduce reversible swelling, and improve the cycling performance.

In some embodiments, the powder OI value of the first negative electrode active material is 5.0 to 20.5; and/or the powder OI value of the second negative electrode active material is 2.5 to 6.5. This helps to decentralize the swelling caused by lithium intercalation, thereby improving the cycling performance of the secondary battery. In addition, this helps to improve the isotropy of the second negative electrode active material, thereby improving the kinetic performance of the secondary battery.

In some embodiments, the powder OI value of the first negative electrode active material is 5.5 to 19.5; and/or the OI value of the second negative electrode active material is 2.8 to 6.3.

In some embodiments, a volume-based particle size Dᵥ50 of the second negative electrode active material is 10.0 µm to 15.5 µm; and/or a particle size distribution (Dᵥ90-Dᵥ10)/Dᵥ50 of the second negative electrode active material is 0.95 to 1.3. This helps to improve the kinetic performance of the secondary battery.

In some embodiments, the volume-based particle size Dᵥ50 of the second negative electrode active material is 11.0 µm to 14.5 µm; and/or the particle size distribution (Dᵥ90-Dᵥ10)/Dᵥ50 of the second negative electrode active material is 0.95 to 1.25.

In some embodiments, in the second negative electrode active material, a volume distribution proportion of particles having a particle size greater than 6.5 µm and less than 22.5 µm is greater than or equal to 75%. This helps to increase the compacted density of the negative electrode film layer, thereby increasing the energy density of the secondary battery.

In some embodiments, in the second negative electrode active material, the volume distribution proportion of particles having a particle size greater than 6.5 µm and less than 22.5 µm is 75% to 90%.

In some embodiments, the second negative electrode active material includes second artificial graphite and third artificial graphite, the second artificial graphite includes primary particles, and the third artificial graphite includes secondary particles. This helps the second negative electrode active material to achieve both excellent kinetic performance and high energy density.

In some embodiments, in the second negative electrode active material, a mass ratio of the second artificial graphite to the third artificial graphite is 1:9 to 3:7. This helps the second negative electrode active material to achieve good kinetic performance, high energy density, and good cycling performance.

In some embodiments, in the second negative electrode active material, the mass ratio of the second artificial graphite to the third artificial graphite is 1:9 to 1:3.

In some embodiments, La(110) of the first artificial graphite is greater than La(110) of the second artificial graphite, and La(110) of the first artificial graphite is greater than La(110) of the third artificial graphite. In some embodiments, La(110) of the second artificial graphite is 100 nm to140 nm, and Lc(002) is 25 nm to 32 nm. In some embodiments, La(110) of the third artificial graphite is 90 nm to 130 nm, and Lc(002) is 26 nm to 34 nm. This helps to maintain a good pore distribution of a negative electrode sheet, and improve the kinetic performance of the cell.

In some embodiments, a volume-based particle size Dᵥ50 of the second artificial graphite is 7 µm to 9 µm, and Dᵥ1 is 3 µm to 5.5 µm; and/or a volume-based particle size Dᵥ50 of the third artificial graphite is 13 µm to 18 µm. This helps to improve the kinetic performance of the secondary battery and increase the energy density of the secondary battery.

In some embodiments, a powder OI value of the second artificial graphite is 7 to 10; and/or a powder OI value of the third artificial graphite is 2 to 5. This helps to improve the kinetic performance and cycling performance of the secondary battery.

In some embodiments, a gram capacity of the second artificial graphite is 354.1 mAh/g to 359.6 mAh/g; and/or a gram capacity of the third artificial graphite is 353.0 mAh/g to 358.2 mAh/g. This helps to increase the energy density of the secondary battery.

In some embodiments, a powder compacted density of the second artificial graphite under a pressure of 50000 N is 1.72 g/cc to 1.92 g/cc; and/or a powder compacted density of the third artificial graphite under a pressure of 50000 N is 1.75 g/cc to 1.95 g/cc. This helps to increase the compacted density of the negative electrode film layer, thereby increasing the energy density of the secondary battery.

In some embodiments, a volume-based particle size Dᵥ50 of the first artificial graphite is 14.5 µm to 18.0 µm. This helps to increase the energy density of the secondary battery. In some embodiments, the volume-based particle size Dᵥ50 of the first artificial graphite is 15.0 µm to 17.5 µm.

In some embodiments, a particle size distribution (Dᵥ90-Dᵥ10)/Dᵥ50 of the first artificial graphite is 0.90 to 1.25. This helps to improve the kinetic performance of the first artificial graphite. In some embodiments, the particle size distribution (Dᵥ90-Dᵥ10)/Dᵥ50 of the first artificial graphite is 0.90 to 1.20.

In some embodiments, a specific surface area of the first artificial graphite is 0.8 m²/g to 2.1 m²/g. This helps to improve the initial Coulombic efficiency and kinetic performance of the secondary battery. In some embodiments, the specific surface area of the first artificial graphite is 1.0 m²/g to 1.9 m²/g.

In some embodiments, the first negative electrode material and/or the second negative electrode active material further includes silicon. This helps to further increase the energy density of the secondary battery.

According to a second aspect, this disclosure provides an electric apparatus, including the secondary battery according to the first aspect of this disclosure. The electric apparatus of this disclosure includes the secondary battery provided by this disclosure and therefore at least has the same advantages as the secondary battery.

### BRIEF DESCRIPTION OF DRAWINGS

FIG. 1 is a schematic diagram of a negative electrode sheet according to an embodiment of this disclosure.
FIG. 2 is a schematic diagram of a battery cell according to an embodiment of this disclosure.
FIG. 3 is an exploded view of the battery cell according to an embodiment of this disclosure shown in FIG. 2.
FIG. 4 is a schematic diagram of a battery module according to an embodiment of this disclosure.
FIG. 5 is a schematic diagram of a battery pack according to an embodiment of this disclosure.
FIG. 6 is an exploded view of the battery pack according to an embodiment of this disclosure shown in FIG. 5.
FIG. 7 is a schematic diagram of an electric apparatus using a secondary battery according to an embodiment of this disclosure as a power source.

### Description of reference signs:

1. battery pack; 2. upper box body; 3. lower box body; 4. battery module; 5. battery cell; 51. housing body; 52. electrode assembly; 53. top cover assembly; 10. negative electrode sheet; 101. negative electrode current collector; 102. negative electrode film layer; 102a. first surface; 102b. second surface; 1021. first region; 1022. second region; and 1023. middle region.

### DESCRIPTION OF EMBODIMENTS

Embodiments of the secondary battery and electric apparatus of this disclosure are specifically disclosed and described below in detail with appropriate reference to the accompanying drawings. However, there may be cases where unnecessary detailed descriptions are omitted. For example, there may be cases where detailed descriptions of well-known matters and repeated descriptions of substantially identical structures are omitted. This is to avoid making the following descriptions unnecessarily lengthy and to facilitate understanding by those skilled in the art. In addition, the accompanying drawings and the following descriptions are provided to enable those skilled in the art to fully understand this disclosure and are not intended to limit the subject described in the claims.

The "range" disclosed in this disclosure is defined in the form of a lower limit and an upper limit, and a given range is defined by selecting one lower limit and one upper limit, and the selected lower limit and upper limit define the boundaries of the specific range. A range defined in this manner may include endpoints or may not include endpoints, which may be arbitrarily combined. To be specific, any lower limit may be combined with any upper limit to form a range. For example, if ranges of 60 to 120 and 80 to 110 are listed for a specific parameter, it is understood that ranges of 60 to 110 and 80 to 120 are also contemplated. In addition, if the minimum range values listed are 1 and 2, and if the maximum range values listed are 3, 4, and 5, the following ranges are all contemplated: 1 to 3, 1 to 4, 1 to 5, 2 to 3, 2 to 4, and 2 to 5. In this disclosure, unless otherwise specified, a numerical range "a-b" is an abbreviated representation of any real number combination between a and b, where a and b are both real numbers. For example, the numerical range "0 to 5" indicates that all real numbers between "0 to 5" have been listed herein, and "0 to 5" is just an abbreviated representation of combinations of these numbers. In addition, when a parameter is expressed as an integer greater than or equal to 2, it is equivalent to disclosing that the parameter is, for example, the integer 2, 3, 4, 5, 6, 7, 8, 9, 10, 11, 12, or the like.

Unless otherwise specified, all embodiments and optional embodiments of this disclosure can be combined with each other to form a new technical solution.

Unless otherwise specified, all technical features and optional technical features of this disclosure can be combined with each other to form a new technical solution.

Unless otherwise specified, the terms used in this disclosure have the well-known meanings generally understood by those skilled in the art.

Unless otherwise specified, the values of various parameters mentioned in this disclosure can be determined using various test methods commonly used in the art, for example, can be determined according to test methods provided in this disclosure.

Unless otherwise specified, in this disclosure, the term "active ions" refers to ions that can be intercalated and deintercalated between a positive electrode and a negative electrode of a secondary battery, including but not limited to lithium ions.

At present, to obtain secondary batteries with high kinetic performance, it has been reported that treatment such as surface coating treatment is performed on graphite materials. However, the use of surface coating methods leads to decrease in gram capacity of the materials and decrease in compacted density of electrode sheets, affecting the energy density of the secondary battery.

In view of this, this disclosure provides a secondary battery and an electric apparatus, to make the secondary battery achieve both high energy density and excellent kinetic performance.

This disclosure imposes no particular limitation on the type of the secondary battery. For example, the secondary battery may be a lithium-ion battery or the like.

Typically, a secondary battery cell includes a positive electrode sheet, a negative electrode sheet, an electrolyte, and a separator. During a charging and discharging process of the secondary battery, active ions are intercalated and deintercalated between the positive electrode sheet and the negative electrode sheet. The electrolyte plays a role of conducting ions between the positive electrode sheet and the negative electrode sheet. The separator is provided between the positive electrode sheet and the negative electrode sheet, mainly playing a role of preventing short circuit between positive and negative electrodes as well as allowing ions to pass through.

### Negative electrode sheet

In the secondary battery of this disclosure, the negative electrode sheet includes a negative electrode current collector and a negative electrode film layer located on at least one surface of the negative electrode current collector. The negative electrode film layer includes a first region and a second region. The first region is located between the second region and the negative electrode current collector. The first region includes a first negative electrode active material. The second region includes a second negative electrode active material. A powder OI value of the second negative electrode active material is less than a powder OI value of the first negative electrode active material. The first negative electrode active material includes first artificial graphite, where La(110) of the first artificial graphite is 130 nm to 175 nm, and Lc(002) is 30 nm to 42 nm. La(110) represents a crystallite size along axis a in a (110) crystal plane of a carbon material, and Lc(002) represents a crystallite size along axis c in a (002) crystal plane of the carbon material.

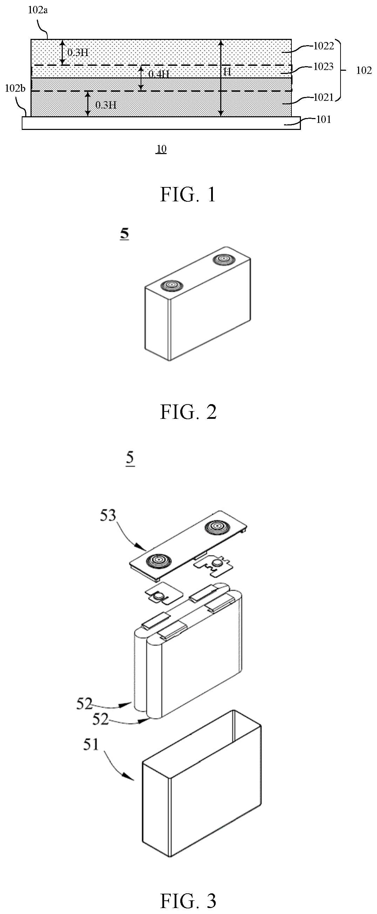

In this disclosure, the negative electrode film layer includes a first region and a second region, and the first region is located between the second region and the negative electrode current collector. To be specific, the first region is located on a side of the negative electrode film layer close to the negative electrode current collector, and the second region is located on a side of the negative electrode film layer away from the negative electrode current collector. FIG. 1 is a schematic diagram of a negative electrode sheet according to an embodiment of this disclosure. As shown in FIG. 1, the negative electrode sheet 10 includes a negative electrode current collector 101 and a negative electrode film layer 102 formed on at least one surface of the negative electrode current collector 101. The negative electrode film layer 102 has a first surface 102a away from the negative electrode current collector 101 and a second surface 102b disposed opposite the first surface 102a, and a thickness of the negative electrode film layer 102 is denoted as H. The thickness H of the negative electrode film layer is a thickness of the negative electrode film layer on a single side of the negative electrode current collector. A region from the second surface 102b of the negative electrode film layer to a thickness range of 0.3H is denoted as a first region 1021 of the negative electrode film layer. A region from the first surface 102a of the negative electrode film layer to a thickness range of 0.3H is denoted as a second region 1022 of the negative electrode film layer. The first region 1021 includes a first negative electrode active material, and the second region 1022 includes a second negative electrode active material. A region between the first region 1021 and the second region 1022 is denoted as a middle region 1023. It is easy to understand that within the range of the middle region 1023, there may be only the first negative electrode active material, only the second negative electrode active material, both the first negative electrode active material and the second negative electrode active material, or other known negative electrode active materials in the art other than the first negative electrode active material and the second negative electrode active material of this disclosure.

It should be understood that in the embodiment shown in FIG. 1, the second surface 102b is in contact with an upper surface of the negative electrode current collector 101, but the structure of the negative electrode sheet of this disclosure is not limited thereto. For example, there may be an additional layer between the negative electrode film layer 102 and the negative electrode current collector 101. In this case, the second surface 102b is not in direct contact with the negative electrode current collector 101.

It should also be understood that although clear boundaries between regions are shown in FIG. 1, such clear interfaces may not exist in the product.

In this disclosure, two negative electrode film layers are provided, so that the negative electrode sheet can still maintain a good pore structure and low tortuosity as well as maintain a short ion transmission path and high ion conduction efficiency under high compacted density. This helps the secondary battery to achieve both high energy density and excellent kinetic performance. In addition, by making the powder OI value of the second negative electrode active material located in the second region less than the powder OI value of the first negative electrode active material located in the first region, active ions are preferentially intercalated into the negative electrode active material located in the second region, helping the negative electrode film layer to maintain excellent kinetic performance. This helps the secondary battery to achieve both high energy density and excellent kinetic performance.

In this disclosure, the first negative electrode active material includes first artificial graphite, La(110) of the first artificial graphite is 130 nm to 175 nm, and Lc(002) is 30 nm to 42 nm, where La(110) represents a crystallite size along axis a in a (110) crystal plane of a carbon material, and Lc(002) represents a crystallite size along axis c in a (002) crystal plane of the carbon material.

In this disclosure, an increase in La of artificial graphite indicates an increase in crystallite size of artificial graphite, and the number of lithium intercalation sites on the surface of artificial graphite increases, so the gram capacity increases. In addition, the increase in crystallite size can also reduce the number of artificial graphite crystallite grain boundaries, increasing the number of lithium intercalation sites and thus reducing the adverse effects on gram capacity and powder compacted density, thereby further increasing the gram capacity and powder compacted density of artificial graphite. Lc of artificial graphite being in the above range helps to reduce stacking of graphite crystallites, reducing the number of grain boundaries between crystallites and helping to increase the number of lithium intercalation sites on the surface of artificial graphite, thereby increasing the gram capacity of artificial graphite. Controlling La(110) and Lc(002) of the first artificial graphite in the above specific ranges allows for good development of graphite crystal grains in the material, facilitating the intercalation of active ions, thereby increasing the gram capacity of the first negative electrode active material. The negative electrode active material located in the first region has high gram capacity and high compacted density, helping the secondary battery to achieve high energy density. Exemplarily, La(110) of the first artificial graphite may be 130 nm, 135 nm, 140 nm, 145 nm, 150 nm, 155 nm, 160 nm, 165 nm, 170 nm, 175 nm, or a value in a range defined by any two of these values. In addition, Lc(002) of the first artificial graphite may be 30 nm, 32 nm, 34 nm, 36 nm, 38 nm, 40 nm, 42 nm, or a value in a range defined by any two of these values.

In some embodiments, La(110) of the first artificial graphite is 132 nm to 172 nm, and/or Lc(002) is 30 nm to 36 nm. Controlling La(110) and Lc(002) of the first artificial graphite in the above range helps to increase the gram capacity and compacted density of the first negative electrode active material, thereby helping the secondary battery to achieve high energy density.

In some embodiments, La(110)/Lc(002) of the first artificial graphite is 3.5 to 5.5. A larger La(110)/Lc(002) indicates better grain development and fewer crystallites in the graphite material, so there are fewer grain boundaries between grains, which helps to increase the lithium intercalation sites on the surface of artificial graphite, thereby helping to increase the gram capacity of the negative electrode active material. In this disclosure, controlling La(110)/Lc(002) of the first artificial graphite in the above range helps to increase the gram capacity of the first negative electrode active material, thereby increasing the energy density of the secondary battery. Exemplarily, La(110)/Lc(002) may be 3.5, 3.8, 4.0, 4.2, 4.4, 4.6, 4.8, 5.0, 5.2, 5.5, or a value in a range defined by any two of these values. In some optional embodiments, in the first artificial graphite, La(110)/Lc(002) is 4.5 to 5.5.

In some embodiments, under conditions of a lithium deintercalation rate of 0.1C and a lithium intercalation rate of 0.05C, a button cell prepared from the first artificial graphite is subjected to a charge-discharge test to obtain charge and discharge curves in a range of 0.005 V to 2.0 V. In the discharge curve, a lithium intercalation plateau is present in a voltage range of 0.005 V to 0.070 V, and a proportion X of a discharge capacity corresponding to the lithium intercalation plateau relative to a total discharge capacity of the button cell is 43% or higher.

In this disclosure, the charge-discharge test is performed using the following method: Sample powder, a conductive agent carbon black (Super P), and a binder polyvinylidene fluoride (PVDF) at a mass ratio of 91.6:1.8:6.6 are mixed with a solvent N-methylpyrrolidone (NMP) uniformly to form a slurry; the prepared slurry is applied onto a surface of a negative electrode current collector copper foil, and the copper foil is dried in an oven for later use; ethylene carbonate (EC), ethyl methyl carbonate (EMC), and diethyl carbonate (DEC) at a volume ratio of 1:1:1 are mixed to obtain an organic solvent, and then LiPF₆ is dissolved in this organic solvent to prepare an electrolyte solution with a concentration of 1 mol/L; subsequently, a metal lithium sheet serving as a counter electrode, a polyethylene (PE) film serving as a separator, and the electrolyte solution are assembled in an argon-protected glove box to form a CR2430 button cell; and after left standing for 12 h, the obtained button cell, at 25°C, is discharged at a constant current at a rate of 0.05C to 0.005 V, left standing for 5 minutes, discharged again at a constant current of 50 µA to 0.005 V, left standing for 5 minutes, discharged again at a constant current of 10 µA to 0.005 V, and charged at a constant current at a rate of 0.1C to 2.0 V, to obtain a relationship between the charge and discharge capacities of the carbon material and the voltage, that is, charge and discharge curves.

In this disclosure, the button cell prepared from the first artificial graphite is subjected to the above charge-discharge test to obtain charge and discharge curves. In the discharge curve, the proportion X of the discharge capacity corresponding to the lithium intercalation plateau in the voltage range of 0.005 V to 0.070 V relative to the total discharge capacity of the button cell is 43% or higher, and the first artificial graphite has high gram capacity, helping to increase the energy density of the secondary battery. Although the mechanism is not clear, the inventors believe that during a lithium intercalation process of a graphite material, as the amount of intercalated lithium ions increases, graphite intercalation compounds of different stages are gradually formed, such as LiC24, LiC12, and LiC6. The formation of graphite intercalation compounds of different stages corresponds to lithium intercalation plateaus in different voltage ranges in the charge and discharge curves of the graphite material. The theoretical capacities of graphite intercalation compounds of different stages are different, for example, the theoretical capacity of LiC6 is 372 mAh/g, while the theoretical specific capacity of LiC12 is 186 mAh/g; therefore, in a lithium intercalation process, a larger amount of LiC6 formed (which corresponds to the lithium intercalation plateau in the voltage range of 0.005 V to 0.07 V) provides greater corresponding capacity contribution, that is, achieving higher gram capacity of the graphite material. Exemplarily, the proportion X may be 43%, 44%, 45%, 46%, 47%, 48%, 49%, 50%, or a value in a range defined by any two of these values. In some embodiments, the proportion X of the discharge capacity corresponding to the lithium intercalation plateau relative to the total discharge capacity of the button cell is 43% to 50%, optionally 43% to 47%.

In some embodiments, a gram capacity of the first negative electrode active material located in the first region is greater than or equal to a gram capacity of the second negative electrode active material located in the second region. This helps to increase the energy density of the secondary battery. The gram capacity of the first negative electrode active material is 359 mAh/g or higher. Controlling the gram capacity of the first negative electrode active material in the above range helps to increase the gram capacity of the negative electrode film layer, thereby increasing the energy density of the secondary battery. Exemplarily, the gram capacity of the first negative electrode active material may be 359 mAh/g, 360 mAh/g, 361 mAh/g, 362 mAh/g, 363 mAh/g, 364 mAh/g, 365 mAh/g, 366 mAh/g, 367 mAh/g, 368 mAh/g, 369 mAh/g, 370 mAh/g, or a value in a range defined by any two of these values. In some optional embodiments, the gram capacity of the first negative electrode active material is 359 mAh/g to 366 mAh/g.

In some embodiments, the gram capacity of the second negative electrode active material is 353 mAh/g to 359 mAh/g. Controlling the gram capacity of the second negative electrode active material in the above range helps to improve the kinetic performance of the secondary battery and also increase the energy density of the secondary battery. Exemplarily, the gram capacity of the second negative electrode active material may be 353 mAh/g, 354 mAh/g, 355 mAh/g, 356 mAh/g, 357 mAh/g, 358 mAh/g, 359 mAh/g, or a value in a range defined by any two of these values. In some optional embodiments, the gram capacity of the second negative electrode active material is 354.6 mAh/g to 356.8 mAh/g.

In some embodiments, a graphitization degree of the first negative electrode active material is greater than a graphitization degree of the second negative electrode active material. The graphitization degree of the first negative electrode active material is 94.0% to 96.0%. Controlling the graphitization degree of the first negative electrode active material in the above range helps the first negative electrode active material to have high compacted density and gram capacity, thereby increasing the energy density of the secondary battery. Exemplarily, the graphitization degree of the first negative electrode active material may be 94.0%, 94.5%, 95.0%, 95.5%, 96.0%, or a value in a range defined by any two of these values. In some optional embodiments, the graphitization degree of the first negative electrode active material is 94.2% to 95.8%.

In some embodiments, the graphitization degree of the second negative electrode active material is 93.5% to 95.5%. Controlling the second negative electrode active material in the above range helps to improve the transmission efficiency of active ions in the second negative electrode active material, thereby improving the kinetic performance of the secondary battery. Exemplarily, the graphitization degree of the second negative electrode active material may be 93.5%, 94.0%, 94.5%, 95.0%, 95.5%, or a value in a range defined by any two of these values. In some optional embodiments, the graphitization degree of the second negative electrode active material is 93.7% to 95.3%.

In some embodiments, a powder compacted density of the first negative electrode active material under a pressure of 50000 N is greater than a powder compacted density of the second negative electrode active material under a pressure of 50000 N. In this disclosure, the first negative electrode active material has higher powder compacted density, which helps to increase the gram capacity of the negative electrode film layer, thereby increasing the energy density of the secondary battery. The powder compacted density of the second negative electrode active material is lower than that of the first negative electrode active material, which helps to improve the kinetic performance of the secondary battery.

In some embodiments, the powder compacted density of the first negative electrode active material under a pressure of 50000 N is 1.95 g/cc to 2.04 g/cc. Controlling the powder compacted density of the first negative electrode active material in the above range helps to increase the compacted density of the negative electrode film layer, thereby increasing the energy density of the secondary battery. Exemplarily, the powder compacted density of the first negative electrode active material under a pressure of 50000 N may be 1.95 g/cc, 1.96 g/cc, 1.97 g/cc, 1.98 g/cc, 1.99 g/cc, 2.00 g/cc, 2.01 g/cc, 2.02 g/cc, 2.03 g/cc, 2.04 g/cc, or a value in a range defined by any two of these values.

In some embodiments, the powder compacted density of the second negative electrode active material under a pressure of 50000 N is 1.75 g/cc to 1.94 g/cc. Exemplarily, the powder compacted density of the second negative electrode active material under a pressure of 50000 N may be 1.75 g/cc, 1.76 g/cc, 1.78 g/cc, 1.80 g/cc, 1.82 g/cc, 1.84 g/cc, 1.86 g/cc, 1.88 g/cc, 1.90 g/cc, 1.92 g/cc, 1.94 g/cc, or a value in a range defined by any two of these values.

In some embodiments, the first artificial graphite includes secondary particles. The first artificial graphite mainly includes secondary particles. For example, more than 80% of first artificial graphite particles are secondary particles. Exemplarily, 80%, 85%, or 90% of the first artificial graphite particles are secondary particles. This helps to improve the isotropy of the first negative electrode active material, reduce reversible swelling, and improve the cycling performance.

In some embodiments, a powder OI value of the first negative electrode active material is 5.0 to 20.5. Controlling the powder OI value of the first negative electrode active material in the above range helps to decentralize the swelling caused by lithium intercalation, thereby improving the cycling performance of the secondary battery. Exemplarily, the powder OI value of the first negative electrode active material may be 5.0, 5.5, 6.0, 6.5, 7.0, 7.5, 8.0, 8.5, 9.0, 9.5, 10, 10.5, 11.0, 12.0, 13.0, 14.0, 15.0, 16.0, 17.0, 18.0, 19.0, 19.5, 20.0, 20.5, or a value in a range defined by any two of these values. In some optional embodiments, the powder OI value of the first negative electrode active material is 5.5 to 19.5.

In some embodiments, the powder OI value of the second negative electrode active material is 2.5 to 6.5. An appropriate powder OI value helps to improve the isotropy of the second negative electrode active material, so that active ions can be deintercalated from all directions, increasing the number of deintercalation channels of active ions in the second negative electrode active material particles, thereby helping to improve the kinetic performance of the secondary battery. Exemplarily, the powder OI value of the second negative electrode active material may be 2.5, 3.0, 3.5, 4.0, 4.5, 5.0, 5.5, 6.0, 6.5, or a value in a range defined by any two of these values. In some embodiments, the powder OI value of the second negative electrode active material is 2.8 to 6.3.

In some embodiments, a volume-based particle size Dᵥ50 of the second negative electrode active material is 10.0 µm to 15.5 µm. Controlling the volume-based particle size Dᵥ50 of the second negative electrode active material in the above range helps to improve the transmission performance of active ions and electrons in the second negative electrode active material in the negative electrode film layer, thereby further improving the kinetic performance of the secondary battery. Exemplarily, the distribution particle size Dᵥ50 of the second negative electrode active material may be 10.0 µm, 10.5 µm, 11.0 µm, 11.5 µm, 12.0 µm, 12.5 µm, 13.0 µm, 13.5 µm, 14.0 µm, 14.5 µm, 15.0 µm, 15.5 µm, or a value in a range defined by any two of these values. In some optional embodiments, the volume-based particle size Dᵥ50 of the second negative electrode active material is 11.0 µm to 14.5 µm.

In some embodiments, a particle size distribution (Dᵥ90-Dᵥ10)/Dᵥ50 of the second negative electrode active material is 0.95 to 1.3. This helps to increase the compacted density of the negative electrode film layer and increase the energy density of the secondary battery. In addition, it also facilitates formation of an appropriate pore channel structure between particles of the negative electrode film layer, and improves the transmission performance of active ions and electrons in the negative electrode film layer, thereby improving the kinetic performance of the secondary battery. Exemplarily, the particle size distribution (Dᵥ90-Dᵥ10)/Dᵥ50 of the second negative electrode active material is 0.95, 1.00, 1.05, 1.10, 1.15, 1.20, 1.25, 1.30, or a value in a range defined by any two of these values. In some optional embodiments, the particle size distribution (Dᵥ90-Dᵥ10)/Dᵥ50 of the second negative electrode active material is 0.95 to 1.25.

In some embodiments, in the second negative electrode active material, a volume distribution proportion of particles having a particle size greater than 6.5 µm and less than 22.5 µm is greater than or equal to 75%. Controlling the volume distribution proportion of the second negative electrode active material in the above range helps to increase the compacted density of the negative electrode film layer, thereby increasing the energy density of the secondary battery. Exemplarily, in the second negative electrode active material, the volume distribution proportion of particles having a particle size greater than 6.5 µm and less than 22.5 µm may be 75%, 80%, 85%, 90%, 95%, or a value between any two of these numbers. In some optional embodiments, in the second negative electrode active material, the volume distribution proportion of particles having a particle size greater than 6.5 µm and less than 22.5 µm is 75% to 90%.

In some embodiments, the second negative electrode active material includes second artificial graphite and third artificial graphite, the second artificial graphite includes primary particles, and the third artificial graphite includes secondary particles. Making the second negative electrode active material include primary particles of the second artificial graphite and secondary particles of the third artificial graphite helps the second negative electrode active material to achieve both excellent kinetic performance and high energy density. During a charging process of the secondary battery, active ions are preferentially intercalated into a side away from the current collector. Therefore, making the second negative electrode active material located in the second region can further improve the kinetic performance of the secondary battery.

In some embodiments, the second artificial graphite mainly includes primary particles. For example, more than 80% of the second artificial graphite particles are primary particles. Exemplarily, 80%, 85%, or 90% of the second artificial graphite particles are primary particles. The third artificial graphite mainly includes secondary particles. For example, more than 80% of the third artificial graphite particles are secondary particles. Exemplarily, 80%, 85%, or 90% of the third artificial graphite particles are secondary particles.

In some embodiments, in the second negative electrode active material, a mass ratio of the second artificial graphite to the third artificial graphite is 1:9 to 3:7. Controlling the mass ratio of the second artificial graphite to the third artificial graphite in the above range helps to adjust the powder OI value and powder compacted density of the second negative electrode active material, thereby enabling the second negative electrode active material to achieve good kinetic performance, high energy density, and good cycling performance. Exemplarily, the mass ratio of the second artificial graphite to the third artificial graphite may be 3:7, 1:3, 1:4, 5:17, 1:9, or a value in a range defined by any two of these ratios. In some optional embodiments, the mass ratio of the second artificial graphite to the third artificial graphite is 1:9 to 1:3.

In some embodiments, La(110) of the first artificial graphite is greater than La(110) of the second artificial graphite, and La(110) of the first artificial graphite is greater than La(110) of the third artificial graphite. La(110) of the second artificial graphite is 100 nm to140 nm, and Lc(002) is 25 nm to 32 nm. La(110) of the third artificial graphite is 90 nm to 130 nm, and Lc(002) is 26 nm to 34 nm. This helps to achieve both high gram capacity and high kinetic performance.

In some embodiments, a volume-based particle size Dᵥ50 of the second artificial graphite is 7 µm to 9 µm, and Dᵥ1 is 3 µm to 5.5 µm. Exemplarily, the volume-based particle size Dᵥ50 of the second artificial graphite is 7 µm, 7.5 µm, 8 µm, 8.5 µm, 9.0 µm, Dᵥ1 is 3.5 µm, 4.0 µm, 4.5 µm, 5.0 µm, or 6.0 µm. Optionally, Dᵥ1 is 3.0 µm to 5.5 µm. Controlling the particle size of the second artificial graphite in the above range helps to reduce a distance of a solid-phase diffusion path of active ions in the primary particles, and improve the deintercalation rate of active ions, thereby improving the kinetic performance of the secondary battery. In addition, it helps to increase the number of active ions intercalated in the primary particles, increasing the gram capacity of the negative electrode active material, thereby helping to increase the energy density of the secondary battery. In some embodiments, a volume-based particle size Dᵥ50 of the third artificial graphite is 13 µm to 18 µm, for example, 13 µm, 14 µm, 15 µm, 16 µm, 17 µm, or 18 µm. Controlling the volume-based particle size of the third artificial graphite in the above range helps to improve the isotropy of the negative electrode active material, increases the number of deintercalation channels of active ions in the negative electrode active material, and helps to improve the transmission efficiency of active ions and electrons, thereby improving the kinetic performance of the secondary battery.

In some embodiments, a powder OI value of the second artificial graphite is 7 to 10, for example, 7.0, 7.5, 8.0, 8.5, 9.0, 9.5, 10, or a value in a range defined by any two of these values. Controlling the powder OI of the second artificial graphite in the above range helps to improve the electric conduction efficiency of the second negative electrode active material, thereby improving the kinetic performance and cycling performance of the secondary battery. In some embodiments, a powder OI value of the third artificial graphite is 2 to 5, for example, 2, 3, 4, 5, or a value in a range defined by any two of these values. Controlling the powder OI value of the third artificial graphite in the above range helps to improve the isotropy of the second negative electrode active material, increase the number of deintercalation channels of active ions, and increase the number of active sites in the negative electrode film layer, thereby improving the kinetic performance of the secondary battery.

In some embodiments, a gram capacity of the second artificial graphite is 354.1 mAh/g to 359.6 mAh/g; and/or a gram capacity of the third artificial graphite is 353.0 mAh/g to 358.2 mAh/g. Controlling the gram capacity of the second artificial graphite and/or the third artificial graphite in the above ranges helps to increase the gram capacity of the negative electrode active material, thereby increasing the energy density of the secondary battery. Exemplarily, the gram capacity of the second artificial graphite is 354.1 mAh/g, 355.2 mAh/g, 356.3 mAh/g, 357.4 mAh/g, 358.5 mAh/g, 359.6 mAh/g, or a value in a range defined by any two of these values. Exemplarily, the gram capacity of the third artificial graphite may be 353.0 mAh/g, 354.1 mAh/g, 355.2 mAh/g, 356.3 mAh/g, 357.4 mAh/g, 358.2 mAh/g, or a value in a range defined by any two of these values.

In some embodiments, a powder compacted density of the second artificial graphite under a pressure of 50000 N is 1.72 g/cc to 1.92 g/cc, for example, 1.72 g/cc, 1.75 g/cc, 1.76 g/cc, 1.77 g/cc, 1.78 g/cc, 1.79 g/cc, 1.80 g/cc, 1.81 g/cc, 1.83 g/cc, 1.85 g/cc, 1.87 g/cc, 1.89 g/cc, 1.90 g/cc, 1.92 g/cc, or a value in a range defined by any two of these values. In some embodiments, a powder compacted density of the third artificial graphite under a pressure of 50000 N is 1.75 g/cc to 1.95 g/cc, for example, 1.75 g/cc, 1.76 g/cc, 1.77 g/cc, 1.78 g/cc, 1.79 g/cc, 1.80 g/cc, 1.81 g/cc, 1.83 g/cc, 1.85 g/cc, 1.87 g/cc, 1.89 g/cc, 1.90 g/cc, 1.92 g/cc, 1.95 g/cc, or a value in a range defined by any two of these values. Controlling the powder compacted density of the second artificial graphite and/or the third artificial graphite in the above ranges helps to increase the compacted density of the negative electrode film layer, thereby increasing the energy density of the secondary battery.

In some embodiments, a volume-based particle size Dᵥ50 of the first artificial graphite is 14.5 µm to 18.0 µm. Exemplarily, the volume-based particle size Dᵥ50 of the first artificial graphite may be 14.5 µm, 15.0 µm, 15.5 µm, 16.0 µm, 16.5 µm, 17.0 µm, 17.5 µm, 18.0 µm, or a value in a range defined by any two of these values. In some optional embodiments, the volume-based particle size Dᵥ50 of the first artificial graphite is 15.0 µm to 17.5 µm. This helps to increase the powder compacted density of the first artificial graphite, thereby increasing the energy density of the secondary battery.

In some embodiments, a particle size distribution (Dᵥ90-Dᵥ10)/Dᵥ50 of the first artificial graphite is 0.90 to 1.25. Exemplarily, the particle size distribution (Dᵥ90-Dᵥ10)/Dᵥ50 of the first artificial graphite is 0.90, 0.95, 1.00, 1.05, 1.10, 1.15, 1.20, 1.25, or a value in a range defined by any two of these values. In some optional embodiments, the particle size distribution (Dᵥ90-Dᵥ10)/Dᵥ50 of the first artificial graphite is 0.90 to 1.20. This helps to improve the kinetic performance of the first artificial graphite.

In some embodiments, a specific surface area of the first artificial graphite is 0.8 m²/g to 2.1 m²/g. Controlling the specific surface area of the first artificial graphite in the above range causes the first artificial graphite to have low surface side reaction activity, thereby reducing the consumption of active ions by SEI film formation and improving the initial Coulombic efficiency of the secondary battery. In addition, high active ion transmission performance can be achieved, improving the kinetic performance of the secondary battery. Exemplarily, the specific surface area of the first artificial graphite may be 0.8 m²/g, 1.0 m²/g, 1.2 m²/g, 1.4 m²/g, 1.6 m²/g, 1.8 m²/g, 2.0 m²/g, 2.1 m²/g, or a value in a range defined by any two of these values. In some optional embodiments, the specific surface area of the first artificial graphite is 1.0 m²/g to 1.9 m²/g.

In some embodiments, the first negative electrode active material and/or the second negative electrode active material further includes silicon. Adding silicon to the first negative electrode active material and/or the second negative electrode active material helps to further increase the energy density of the secondary battery. Exemplarily, the silicon may come from one or more of nano-silicon materials, silicon monoxide materials, and silicon-carbon composite materials. In some embodiments, the content of silicon is less than or equal to 30wt% based on the total mass of the negative electrode film layer. Exemplarily, the content of silicon may be 30wt%, 25wt%, 20wt%, 10wt%, 9wt%, 8wt%, 7wt%, 6wt%, 5wt%, 4wt%, 3wt%, 2wt%, 1wt%, 0.1wt%, or a value in a range defined by any two of these values based on a total mass of the negative electrode film layer. In some optional embodiments, the content of silicon is 3wt% to 10wt% based on the total mass of the negative electrode film layer.

In this disclosure, La(110) and Lc(002) of artificial graphite may be determined using instruments and methods known in the art. For example, a negative electrode sheet removed from the secondary battery may be washed with an organic solvent such as DMC, and then dried. Subsequently, the washed negative electrode sheet is soaked in NMP and subjected to an ultrasonic treatment to separate a copper foil, to obtain a negative electrode material. After drying, the negative electrode material is calcined into powder at 350°C to 500°C and then washed with water for multiple times, followed by drying at 80°C, to obtain a negative electrode active material. An X-ray diffractometer (such as Bruker D8 Discover) is used to test the negative electrode active material, where the test may be performed with reference to JIS K 0131-1996 and JB/T 4220-2011, to obtain the peak intensity and full width at half maximum (FWHM) of a diffraction peak corresponding to a (110) crystal plane of a carbon material as well as the peak intensity and full width at half maximum (FWHM) of a diffraction peak corresponding to a (002) crystal plane, and then the Scherrer formula is used for calculation.

In this disclosure, the powder OI value of the material (the first negative electrode active material, second negative electrode active material, first artificial graphite, second artificial graphite, third artificial graphite, or the like) refers to a graphite orientation degree of the material, for describing the consistency of the orientation of crystals in graphite material particles. The powder OI value of the material is a ratio of a peak area of a (004) plane to a peak area of a (110) plane obtained by testing the material using an X-ray diffraction method. For example, an X-ray diffractometer (such as Bruker D8 Discover) may be used for testing, where the test may be performed with reference to JIS K 0131-1996 and JB/T 4220-2011, to obtain an X-ray diffraction pattern of a powder sample, and the powder OI value of the sample is obtained through calculation according to OI value=I₀₀₄/I₁₁₀. I₀₀₄ is an integral area of a diffraction peak of a 004 crystal plane of crystalline carbon in the powder sample, and I₁₁₀ is an integral area of a diffraction peak of a 110 crystal plane of crystalline carbon in the powder sample. In the X-ray diffraction analysis test of this disclosure, a copper target may be used as an anode target, and CuKα ray is used as a radiation source, with a ray wavelength λ equal to 1.5418 Å, a scanning 2θ angle range of 20° to 80°, and a scanning rate of 4°/min.

In this disclosure, the powder compacted density of the material (the first negative electrode active material, second negative electrode active material, first artificial graphite, second artificial graphite, third artificial graphite, or the like) refers to a mass per unit volume of powder under specified conditions, and may be determined using instruments and methods known in the art. For example, it can be determined using an electronic pressure testing machine (for example, a UTM7305 electronic pressure testing machine) with reference to GB/T 24533-2009. An exemplary test method is as follows: 1 g of sample powder is weighed and added to a mold with a bottom area of 1.327 cm², the mold is pressurized to 50000 N and maintained at the pressure for 30s; and subsequently, the pressure is released and maintained for 10 s, followed by recording, to obtain the powder compacted density of the material under a pressure of 50000 N through calculation.

In this disclosure, the volume-based particle sizes Dᵥ1, Dᵥ10, Dᵥ50, and Dᵥ90 of the material (the first negative electrode active material, second negative electrode active material, first artificial graphite, second artificial graphite, third artificial graphite, or the like) respectively represent particle sizes at which the cumulative volume distribution percentages of the material reaches 1%, 10%, 50%, and 90%, and may be determined using instruments and methods known in the art. For example, they may be determined using a laser particle size analyzer with reference to GB/T 19077-2016. A Mastersizer 3000 laser particle size analyzer from Malvern Instruments Ltd., UK may be used as a testing instrument.

In this disclosure, a volume distribution proportion of particles having a particle size greater than 6.5 µm and less than 22.5 µm may be determined using the following method: the particle size may be determined using instruments and methods known in the art. For example, it may be determined using a laser particle size analyzer with reference to GB/T 19077-2016. A volume distribution proportion X corresponding to a particle size less than or equal to 6.5 µm and a volume distribution proportion Y corresponding to a particle size less than 22.5 µm are tested, and the volume distribution proportion of particles having a particle size greater than 6.5 µm and less than 22.5 µm is calculated using the formula (Y-X)*100%.

In this disclosure, the gram capacity of the material (the first negative electrode active material, second negative electrode active material, first artificial graphite, second artificial graphite, third artificial graphite, or the like) is a ratio of an electrical capacity that the active material can release to a mass of the active material, and may be tested using methods known in the art. An exemplary test method is as follows: sample powder, a conductive agent, a binder, and another optional additive at a specific mass ratio are mixed with a solvent uniformly to form a slurry; the prepared slurry is applied onto a surface of a negative electrode current collector copper foil, and the copper foil is dried in an oven for later use; an electrolytic salt is dissolved in an organic solvent to prepare an electrolyte solution with a specific concentration; and then, a metal lithium sheet serving as a counter electrode, a polyethylene (PE) film serving as a separator, and the electrolyte solution are assembled in an argon-protected glove box to form a CR2430 button cell. After left standing for 12 h, the prepared button cell, at 25°C, is first discharged at a constant current of 0.15 mA to 0.005 V, left standing for 10 minutes, discharged at a constant current of 50 µA to 0.005 V, left standing for 10 minutes, and then discharged at a constant current of 10 µA to 0.005 V; a discharge capacity of the button cell at the first cycle is recorded; then, the button cell is charged at constant current of 0.3 mA to 2.0 V; and a charge capacity of the button cell at the first cycle is recorded. A ratio of the charge capacity to the mass of the sample is the gram capacity of the corresponding material (the negative electrode active material, first artificial graphite, second artificial graphite, third artificial graphite, or the like).

In this disclosure, the graphitization degree of the material (the first negative electrode active material, second negative electrode active material, first artificial graphite, second artificial graphite, third artificial graphite, or the like) is a proportion of the carbon element in the material existing in the form of a graphite structure, and may be tested using instruments and methods known in the art. For example, an X-ray diffractometer (such as Bruker D8 Discover) may be used for testing, where the test may be performed with reference to JIS K 0131-1996 and JB/T 4220-2011, to obtain an average interlayer spacing d₀₀₂ of a C(002) crystal plane in a crystal structure of the material, and then the graphitization degree is calculated using the formula g=(0.344-d₀₀₂)/(0.344-0.3354)×100%. In this formula, d₀₀₂ is the average interlayer spacing of the C(002) crystal plane in the crystal structure of the material, expressed in nanometers (nm).

In this disclosure, the thickness of the negative electrode film layer has the meaning well known in the art, and may be tested using methods known in the art, for example, using a micrometer (such as the Mitutoyo 293-100 type, with an accuracy of 0.1 µm). A thickness range given in this disclosure is a thickness range of the negative electrode film layer on one side of the negative electrode current collector.

In this disclosure, primary particles and secondary particles both have the meanings well known in the art. Primary particles refer to non-agglomerated particles. Secondary particles refer to agglomerated particles formed by aggregation of two or more primary particles. Primary particles and secondary particles can be distinguished by using a scanning electron microscope (SEM) image.

### Preparation method of negative electrode sheet

The negative electrode sheet in this disclosure may be prepared in the following manner: A first slurry including a first negative electrode active material and a second slurry including a second negative electrode active material are provided; the first slurry is applied onto a negative electrode current collector; and the second slurry is applied onto the first slurry, followed by drying and cold pressing, to obtain a negative electrode sheet.

A preparation method of the first negative electrode active material in this disclosure includes the following steps.

### Preparation steps of first artificial graphite:

Pretreatment step: Calcined needle coke is crushed and shaped to obtain a shaped material, where the calcined needle coke has a carbon content of 97% or higher, a volatile component content of 2% or lower, and a sulfur content of 0.5% or lower.

### Granulation step: The shaped material is mixed with a first binder to obtain a granulated material.

Graphitization step: A first graphitization treatment is performed on the granulated material at 3000°C to 3200°C to obtain first artificial graphite with La(110) of 130 nm to 175 nm and Lc(002) of 30 nm to 42 nm, as a first negative electrode active material.

In this disclosure, calcined needle coke is used as a raw material. A needle structure of the calcined needle coke is stronger, with fewer mosaic structures. The use of the calcined needle coke as the raw material helps to reduce the content of impurities in the artificial graphite, thereby increasing the graphitization degree of the artificial graphite.

In this disclosure, the carbon content of the calcined needle coke is 97% or higher, the volatile component content is 2% or lower, and the sulfur content is 0.5% or lower. The so-called volatile components herein refer to hydrocarbons with a low molecular weight, such as light alkanes. The sulfur content and volatile components of the calcined needle coke are in the above ranges, the raw material is good is purity, which facilitates grain development during graphitization, reduces the number of defects during graphitization, and increases the graphitization degree of the artificial graphite and the value of La(110) of the artificial graphite, thereby increasing the gram capacity and compacted density of the negative electrode film layer, and increasing the energy density of the secondary battery.

In this disclosure, a graphitization treatment temperature is 3000°C to 3200°C. The graphitization temperature being in the above range facilitates the growth and development of graphite crystal grains, which helps to increase the value of La(110) of the graphite material and also helps to increase the graphitization degree of the artificial graphite, thereby increasing the gram capacity of the first artificial graphite and increasing the energy density of the secondary battery. Exemplarily, the graphitization temperature may be 3000°C, 3050°C, 3100°C, 3150°C, 3200°C, or a value in a range defined by any two of these values.

In this disclosure, using a high-purity raw material and controlling the graphitization temperature to be 3000°C to 3200°C facilitates development of the 110 crystal planes of the graphite crystal grains along axis a during graphitization treatment, increasing the value of La(110) of the artificial graphite and also helping to reduce the number of defects during graphitization, thereby helping to increase the energy density of the secondary battery.

Those skilled in the art may adjust a graphitization time as needed. Exemplarily, an Acheson graphitization furnace may be used for graphitization treatment, and when the temperature is above 2800°C, the graphitization time may be 2 days to 8 days.

In some embodiments, a volume-based particle size Dᵥ50 of the shaped material is 9 µm to 13 µm. Controlling the volume-based particle size Dᵥ50 of the shaped material in the range of 9 µm to 13 µm helps to reduce the number of grain boundaries between the formed crystals with grain boundary structures in the artificial graphite, thereby increasing the gram capacity and powder compacted density of the artificial graphite.

In some embodiments, a softening point of the first binder is 180°C to 270°C. In this disclosure, the softening point may be tested using instruments and methods known in the art. For example, it may be determined with reference to GB/T4507-2014. When the softening point of the first binder is in the above range, polycyclic aromatic hydrocarbon in the first binder has a large molecular weight and high content, which helps to improve the adhesivity of the first binder and reduces the amount of the first binder used in the granulation step, thereby increasing the gram capacity and compacted density of the first artificial graphite. Exemplarily, the softening point of the first binder may be 180°C, 200°C, 220°C, 240°C, 260°C, 270°C, or a value in a range defined by any two of these values.

In some embodiments, a coking value of the first binder is 50% to 70%. In this disclosure, the coking value may be tested using methods known in the art. Exemplarily, it may be determined with reference to GB/T 8727-2008. The coking value of the first binder being in the above range helps to increase the gram capacity and compacted density of the first artificial graphite, thereby increasing the energy density of the secondary battery.

In some embodiments, a mass ratio of the shaped material to the first binder is 100:(6 to 12). The ratio of the shaped material to the first binder being in the above range helps to reduce the amount of residual carbon brought by the first binder and increases the gram capacity and compacted density of the first artificial graphite, thereby increasing the energy density of the secondary battery.

In some embodiments, before the graphitization step, a step of precarbonizing the granulated material to obtain an intermediate is further included. Performing the precarbonization step helps to reduce the volatile components in the first binder, thereby reducing the impurity content in the first artificial graphite, increasing the gram capacity and compacted density of the first artificial graphite, and increasing the energy density of the secondary battery.

In some embodiments, a precarbonization temperature is 1000°C to 1500°C. Exemplarily, the precarbonization temperature may be 1000°C, 1100°C, 1200°C, 1300°C, 1400°C, 1500°C, or a value in a range defined by any two of these values. By controlling the precarbonization temperature in the above range, the volatile components contained in the raw material can be fully removed, which helps to reduce the number of impurities and defects in the artificial graphite, thereby increasing the gram capacity of the artificial graphite. In addition, the precarbonization treatment can increase the density of the raw material, and increase the amount of the raw material loaded in the furnace during graphitization. In an optional embodiment, the precarbonization temperature is 1000°C to 1100°C.

In some embodiments, a precarbonization time is 1 h to 4 h. Exemplarily, the precarbonization time may be 1 h, 2 h, 3 h, 4 h, or a value between any two of these.

In some embodiments, precarbonization is performed under a protective atmosphere. Exemplarily, the protective atmosphere may be nitrogen or argon. In an optional embodiment, precarbonization is performed under a nitrogen atmosphere.

In some embodiments, a volume-based particle size Dᵥ50 of the intermediate is 15 µm to 18 µm. The particle size of the intermediate being in the above range helps to increase the particle size of the first artificial graphite, thereby increasing the gram capacity of the first artificial graphite and increasing the energy density of the secondary battery.

In some embodiments, the preparation method further includes performing a surface micro-oxidation treatment on the artificial graphite after the graphitization step. In this disclosure, the surface micro-oxidation treatment may be performed using methods known in the art. Exemplarily, the surface micro-oxidation treatment may be performed on the artificial graphite under an air atmosphere at 700°C for 1 hour to 4 hours. The surface micro-oxidation treatment of the artificial graphite can increase oxidized functional groups on the surface of the artificial graphite, enhance a binding force between artificial graphite particles and between artificial graphite and the binder, and reduce the rebound effect. This helps to increase the powder compacted density of the artificial graphite, thereby increasing the energy density of the secondary battery.

A preparation method of the second negative electrode active material in this disclosure includes the following steps.

Preparation step of second artificial graphite: A second raw material containing the sulfur element with a mass percentage of less than or equal to 1.5% is crushed, shaped, classified, screened, and then subjected to second graphitization at 3000°C to 3200°C to prepare primary particles as second artificial graphite.

Preparation step of third artificial graphite: A third raw material containing the sulfur element with a mass percentage of less than or equal to 1.5% is crushed and shaped to obtain primary particles, then added with a second binder for granulation, and subjected to third graphitization at 3000°C to 3200°C to prepare secondary particles as third artificial graphite.

Mixing step: The second artificial graphite and the third artificial graphite are mixed to obtain a second negative electrode active material; where a powder OI value of the second negative electrode active material is 2.5 to 6.5, and a powder compacted density of the negative electrode active material under a pressure of 50000 N is 1.75 g/cc to 1.94 g/cc.

In this disclosure, in the preparation step of the second artificial graphite and/or the preparation step of the third artificial graphite, the second graphitization and/or the third graphitization is performed at 3000°C to 3200°C. Exemplarily, the second graphitization and/or the third graphitization may be performed at a temperature of 3000°C, 3050°C, 3100°C, 3150°C, 3200°C, or a value in a range defined by any two of these values.

Those skilled in the art may adjust the graphitization time as needed. In some embodiments, the treatment time of the second graphitization and/or the third graphitization may be 4 hours to 60 hours. Exemplarily, when the raw material is low-sulfur raw needle coke, the graphitization temperature is 3100°C, and the graphitization time may be 12 hours, 24 hours, or 36 hours.

By mixing the second artificial graphite and the third artificial graphite, the primary particles of the second artificial graphite have a smaller particle size and high powder compacted density, and the secondary particles of the third artificial graphite have high isotropy, so that the powder OI value of the second negative electrode active material is 2.5 to 6.5, and the powder compacted density of the second negative electrode active material under a pressure of 50000 N is 1.75 g/cc to 1.94 g/cc, which helps to exert the characteristics of high capacity, high compacted density, and excellent kinetic performance of the second negative electrode active material, thereby making the secondary battery have high energy density and excellent kinetic performance. The second artificial graphite with a smaller particle size can fill gaps between the secondary particles of the third artificial graphite in the negative electrode active material to support and disperse the secondary particles, improving the structural stability and processing performance of the second negative electrode active material, reducing the amounts of a dispersant and a suspending agent used in the negative electrode film layer, and increasing the active sites of the second negative electrode active material, thereby improving the kinetic performance of the secondary battery, and increasing the proportion of the negative electrode active material in the second negative electrode film layer. Thus, the energy density of the secondary battery is increased.

In some embodiments, in the preparation step of the second artificial graphite, second graphitization is performed to prepare primary particles with a volume-based particle size Dᵥ50 of 7 µm to 9 µm and Dᵥ1 of 3 µm to 5.5 µm as the second artificial graphite. In the preparation step of the second artificial graphite, a classifier is used for classification to prepare primary particles with a volume-based particle size Dᵥ50 of 7 µm to 9 µm and Dᵥ1 of 3 µm to 5.5 µm. The small particle size of the primary particles helps to reduce a distance of a solid-phase diffusion path of active ions in the primary particles and increases the deintercalation rate of active ions, thereby improving the kinetic performance of the secondary battery. In addition, controlling the volume-based particle size Dᵥ1 of the primary particles to be 3 µm to 5.5 µm helps to increase the number of active ions intercalated in the primary particles, which helps to increase the gram capacity of the second negative electrode active material, thereby helping to increase the energy density of the secondary battery.

In some embodiments, in the preparation step of the third artificial graphite, a third raw material is crushed and shaped to obtain primary particles with a volume-based particle size Dᵥ50 of 7 µm to 9 µm; then, a binder is added for granulation; and third graphitization is performed at 3000°C to 3200°C to prepare secondary particles with (Dᵥ90-Dᵥ10)/Dᵥ50 of 1.0 to 1.25 and Dᵥ50 of 13 µm to 18 µm, to obtain the third artificial graphite. In the preparation step of the third artificial graphite, the preparation of the secondary particles with Dᵥ50 of 13 µm to 18 µm helps to improve the isotropy of the second negative electrode active material, increase the number of deintercalation channels of active ions in the second negative electrode active material, and helps to improve the transmission efficiency of active ions and electrons, thereby improving the kinetic performance of the secondary battery.

In this disclosure, a raw material which is well known in the art and can be used to prepare artificial graphite may be used as the second raw material and/or the third raw material, without particular limitation. Exemplarily, the second raw material and/or the third raw material may include one or more of raw petroleum coke, calcined petroleum coke, raw needle coke, calcined needle coke, pitch coke, and metallurgical coke. Optionally, the raw material may include one or more of raw petroleum coke, raw needle coke, and calcined needle coke. In one embodiment, the second raw material and/or the third raw material is raw needle coke.

In some embodiments, the sulfur element content in the second raw material and/or the third raw material is less than or equal to 0.6% by mass, and the volatile component content is less than or equal to 7% by mass. The so-called volatile components herein refer to volatile organic substances, such as alkanes, aromatics, and lipids. The sulfur content and volatile components of the second raw material and/or the third raw material being in the above ranges helps to reduce impurities in the prepared second artificial graphite and third artificial graphite and increase the graphitization degree of the negative electrode active material, thereby increasing the energy density of the secondary battery.

In this disclosure, classification and screening may be implemented using devices well known in the art, without particular restriction. In some embodiments, classification and screening may be performed using a classifier. Exemplarily, the classifier is selected from a cyclone classifier and an airflow classifier.

In this disclosure, a binder well known in the art may be used as the second binder in the preparation step of the third artificial graphite, without particular restriction. Exemplarily, the second binder may include one or more of oily pitch, coal pitch, polymers, and the like. In some embodiments, in the preparation step of the third artificial graphite, a softening point of the second binder is greater than or equal to 150°C. A binder with a softening point in the above range has a high coking value and is easy to graphitize, which helps to increase the powder compacted density of the third artificial graphite, thereby increasing the gram capacity of the negative electrode active material and increasing the energy density of the secondary battery. In some optional embodiments, the softening point of the binder is 150°C to 280°C. Exemplarily, the softening point of the binder may be 150°C, 160°C, 170°C, 180°C, 190°C, 200°C, 210°C, 220°C, 230°C, 240°C, 250°C, 260°C, 270°C, 280°C, or a value in a range defined by any two of these values.

In some embodiments, in the preparation step of the third artificial graphite, a mass percentage of the second binder is 8% to 14% relative to a mass of the primary particles. Controlling the mass of the binder in the above range helps to achieve good adhesion and improve the isotropy of the secondary particles. Exemplarily, the mass percentage of the second binder may be 8%, 9%, 10%, 11%, 12%, 13%, 14%, or a value in a range defined by any two of these values relative to the mass of the primary particles.

In some embodiments, in the mixing step, a ratio of the second artificial graphite to the third artificial graphite is 1:9 to 3:7. Controlling the mass ratio of the second artificial graphite to the third artificial graphite in the above range helps to adjust the powder OI value and powder compacted density of the second negative electrode active material, thereby enabling the second negative electrode active material to achieve good kinetic performance, high energy density, and good cycling performance. Exemplarily, the mass ratio of the second artificial graphite to the third artificial graphite may be 3:7, 1:3, 1:4, 5:17, 1:9, or a value between any two of these ratios. In one embodiment, the mass ratio of the second artificial graphite to the third artificial graphite is 1:9 to 1:3. In an optional embodiment, the mass ratio of the second artificial graphite to the third artificial graphite is 1:3.

In some embodiments, a metal foil or a composite current collector may be used as the negative electrode current collector. For example, a copper foil may be used as the metal foil. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, and the like) on a polymer material substrate (such as a substrate of polypropylene (PP), polyethylene terephthalate (PET), polybutylene terephthalate (PBT), polystyrene (PS), and polyethylene (PE)).

In some embodiments, the first negative electrode active material, an optional conductive agent, an optional binder, and another optional auxiliary agent may be dispersed in a solvent (such as deionized water) to form a first slurry. The second negative electrode active material, an optional conductive agent, an optional binder, and another optional auxiliary agent may be dispersed in a solvent (such as deionized water) to form a second slurry. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The conductive agent may be selected from at least one of superconducting carbon, acetylene black, carbon black, Ketjen black, carbon dots, carbon nanotubes, graphene, and carbon nanofiber. In some embodiments, the negative electrode film layer further optionally includes another auxiliary agent, for example, a thickener (such as carboxymethyl cellulose sodium (CMC-Na)), and the like.

### Positive electrode sheet

The positive electrode sheet includes a positive electrode current collector and a positive electrode film layer provided on at least one surface of the positive electrode current collector, and the positive electrode film layer includes the positive electrode active material according to the first aspect of this disclosure.

In an example, the positive electrode current collector has two opposite surfaces in its thickness direction, and the positive electrode film layer is provided on either or both of the two opposite surfaces of the positive electrode current collector.

In some embodiments, a metal foil or a composite current collector may be used as the positive electrode current collector. For example, an aluminum foil may be used as the metal foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, and the like) on a polymer material substrate (such as a substrate of polypropylene (PP), polyethylene terephthalate (PET), polybutylene terephthalate (PBT), polystyrene (PS), and polyethylene (PE)).

In some embodiments, when the battery cell is a lithium-ion battery, a positive electrode active material well known in the art for lithium-ion batteries may be used as the positive electrode active material. In an example, the positive electrode active material may include at least one of the following materials: lithium-containing phosphates of an olivine structure, lithium transition metal oxides, and respective modified compounds thereof. However, this disclosure is not limited to these materials, and other conventional materials that can be used as positive electrode active materials for batteries may also be used. These positive electrode active materials may be used alone, or two or more of them may be used in combination. Examples of lithium transition metal oxides may include but are not limited to at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), lithium nickel cobalt aluminum oxide (such as LiNi_{0.85}Co_{0.1}Al_{0.05}O₂), and modified compounds thereof. Examples of lithium-containing phosphates of an olivine structure may include but are not limited to at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

It should be noted that in the embodiments of this disclosure, the above chemical formulas are the chemical formulas of the materials used in a preparation process of the secondary battery. In the positive electrode sheet, battery cell, and electric device, due to processes such as formation and cycling, those skilled in the art can understand that there may be loss of the elements in the above chemical formulas. For example, in the positive electrode sheet, battery cell, and electric device, due to processes such as cycling, there is loss of the oxygen element in the positive electrode active material, so the measured content of the oxygen element in the positive electrode active material decreases.

It should be noted that in the positive electrode sheet, battery cell, and electric device, due to processes such as formation and cycling, lithium ions are consumed, so the measured content of the lithium element in the positive electrode active material decreases. In addition, if the positive electrode sheet and negative electrode sheet are supplemented with lithium, after processes such as formation and cycling, the measured content of the lithium element in the positive electrode active material increases.

The charging and discharging process of the battery is accompanied with deintercalation and consumption of Li, and a molar content of Li varies when the battery is discharged to different states. In the enumeration of positive electrode active materials in this disclosure, the molar content of Li is based on an initial state of the material, that is, a state before feeding. When the positive electrode active material is applied to a battery system, after charge-discharge cycling, the molar content of Li changes.

In the enumeration of positive electrode active materials in this disclosure, a molar content of O is only a theoretical state value, lattice oxygen release causes a change in the molar content of oxygen, and an actual molar content of O fluctuates.

In some embodiments, the positive electrode film layer further optionally includes a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer further optionally includes a conductive agent. In an example, the conductive agent may include at least one of superconducting carbon, acetylene black, carbon black, Ketjen black, carbon dots, carbon nanotubes, graphene, and carbon nanofiber.

In some embodiments, the positive electrode sheet may be prepared in the following manner: the above components for preparing the positive electrode sheet, such as the positive electrode active material, the conductive agent, the binder, and any other components, are dispersed in a solvent (such as N-methylpyrrolidone) to form a positive electrode slurry; and the positive electrode slurry is applied onto a positive electrode current collector, followed by processes such as drying and cold pressing, to obtain a positive electrode sheet.

### Electrolyte

The electrolyte plays a role of conducting ions between the positive electrode sheet and the negative electrode sheet. This disclosure imposes no specific limitation on the type of the electrolyte, and the electrolyte may be selected according to needs. For example, the electrolyte may be liquid, gel, or all-solid.

In some embodiments, the electrolyte may be an electrolyte solution. The electrolyte solution includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluorooxalate borate, lithium dioxalate borate, lithium difluorodioxalate phosphate, and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally includes an additive. For example, the additive may include a negative electrode film-forming additive and a positive electrode film-forming additive, and may further include additives that can improve some properties of the battery, such as additives that improve the overcharge performance of the battery, additives that improve the high or low temperature performance of the battery, and the like.

### Separator

In some embodiments, the battery cell further includes a separator. This disclosure imposes no particular limitation on the type of the separator, and any well-known porous separator with good chemical stability and mechanical stability may be used.

In some embodiments, the material of the separator may be selected from at least one of glass fiber, nonwoven fabric, polyethylene, polypropylene, and polyvinylidene fluoride. The separator may be a single-layer film or a multi-layer composite film, without particular limitation. When the separator is a multi-layer composite film, the materials of the layers may be the same or different, without particular limitation.

In some embodiments, the positive electrode sheet, negative electrode sheet, and separator may be made into an electrode assembly through a winding process or a stacking process.

In some embodiments, the battery cell may include an outer package. The outer package may be configured to encapsulate the above electrode assembly and electrolyte.

In some embodiments, the outer package of the battery cell may be a hard housing, such as a hard plastic housing, aluminum housing, or a steel housing. The outer package of the battery cell may alternatively be a soft package, such as a pouch soft package. The material of the soft package may be plastic, and examples of plastic include polypropylene, polybutylene terephthalate, polybutylene succinate, and the like.

This disclosure imposes no particular limitation on the shape of the battery cell, and the battery cell may be cylindrical, prismatic, or of any other shape. For example, FIG. 2 shows a prismatic battery cell 5 as an example.

In some embodiments, referring to FIG. 3, the outer package may include a housing body 51 and a top cover assembly 53. The housing body 51 may include a bottom plate and a side plate connected to the bottom plate, and the bottom plate and the side plate enclose an accommodating cavity. The housing body 51 has an opening in communication with the accommodating cavity, and the top cover assembly 53 may cover the opening to close the accommodating cavity. The positive electrode sheet, negative electrode sheet, and separator can form an electrode assembly 52 through a winding process or a stacking process. The electrode assembly 52 is encapsulated in the accommodating cavity. The electrolyte solution infiltrates into the electrode assembly 52. There may be one or more electrode assemblies 52 contained in the battery cell 5, and those skilled in the art may select according to specific actual needs.

In some embodiments, the battery cell may be assembled into a battery module, there may be one or more battery cells contained in the battery module, and the specific number may be selected by those skilled in the art according to the application and capacity of the battery module.

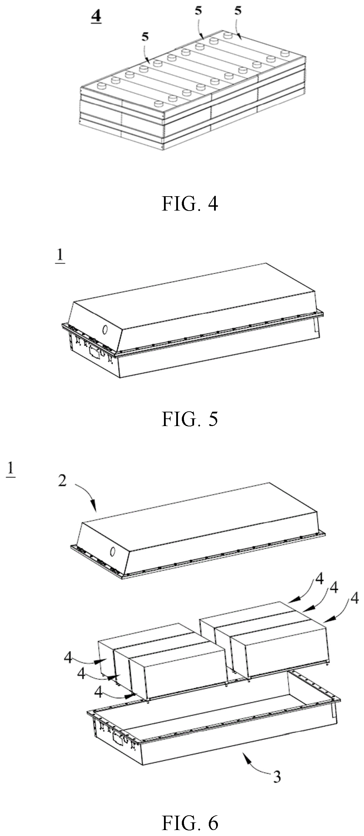

FIG. 4 shows a battery module 4 as an example. Referring to FIG. 4, in the battery module 4, a plurality of battery cells 5 may be arranged in sequence along a length direction of the battery module 4. Certainly, they may alternatively be arranged in any other manner. Further, the plurality of battery cells 5 may be fixed by fasteners.

Optionally, the battery module 4 may further include a housing with an accommodating space, and the plurality of battery cells 5 are accommodated in the accommodating space.

In some embodiments, the above battery module may alternatively be assembled into a battery pack, there may be one or more battery modules contained in the battery pack, and the specific number may be selected by those skilled in the art according to the application and capacity of the battery pack.

FIG. 5 and FIG. 6 show a battery pack 1 as an example. Referring to FIG. 5 and FIG. 6, the battery pack 1 may include a battery box and a plurality of battery modules 4 provided in the battery box. The battery box includes an upper box body 2 and a lower box body 3, and the upper box body 2 can cover the lower box body 3 to form a closed space for accommodating the battery modules 4. The plurality of battery modules 4 may be arranged in the battery box in any manner.

In addition, this disclosure further provides an electric apparatus. The electric apparatus includes the secondary battery provided by this disclosure. The secondary battery may be used as a power source of the electric apparatus or as an energy storage unit of the electric apparatus. The electric apparatus may include mobile devices (such as mobile phones and notebook computers), electric vehicles (such as battery electric vehicles, hybrid electric vehicles, plug-in hybrid electric vehicles, electric bicycles, electric scooters, electric golf carts, and electric trucks), electric trains, ships, satellites, energy storage systems, and the like, but is not limited thereto.

A battery cell, battery module, or battery pack may be selected for the electric apparatus according to the use requirements of the electric apparatus.

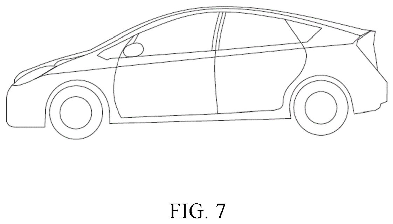

FIG. 7 shows an electric apparatus as an example. The electric apparatus is a battery electric vehicle, a hybrid electric vehicle, a plug-in hybrid electric vehicle, or the like. To meet the requirements of the electric apparatus on high power and high energy density of a secondary battery, a battery pack or battery module may be used.

In another example, the apparatus may be a mobile phone, a tablet computer, a notebook computer, or the like. Such apparatus is usually required to be light and thin, and may use a battery cell as a power source.

### Examples

The following describes examples of this disclosure. The examples described below are exemplary, are only used to explain this disclosure, and cannot be understood as limiting this disclosure. In the examples, specific techniques or conditions that are not indicate are performed according to the techniques or conditions described in the literature in the art or according to the product instructions. Reagents or instruments used without indicating the manufacturers are all conventional products that are commercially available.

### Preparation of first negative electrode active material

### Material 1-1

Step 1: An oil-based calcined needle coke raw material (with a carbon content of 98.5%, a volatile component content of 1.0%, and a sulfur element content of 0.5%) was crushed and shaped using an airflow mill to obtain a shaped material with Dᵥ50 of 11 µm.

Step 2: Granulation pitch with a softening point of 200°C was used as a first binder, and granulated together with the above shaped material in a granulation kettle to obtain a granulated material, where a mass ratio of the shaped material to the first binder was 100:8.

Step 3: Precarbonization was performed on the above granulated material under a nitrogen atmosphere at 1150°C for 2 hours to obtain an intermediate.

Step 4: Graphitization was performed on the above intermediate at a high temperature of 3020°C, and the graphitized particles are screened and demagnetized to obtain first artificial graphite with La(110) being 131.7 nm and Lc(002) being 32.5 nm as the first negative electrode active material 1-1.

### Materials 1-2 to 1-4 and materials 1-1' and 1-2'

Preparation methods of materials 1-2 to 1-4 and materials 1-1' and 1-2' were similar to that of material 1-2, except that the type of raw materials and the graphitization temperature were adjusted to make La(110), Lc(002), La/Lc, powder OI value, gram capacity, powder compacted density, and Dᵥ50 of materials 1-2 to 1-4 and materials 1-1' and 1-2' be the values shown in Table 1.

The above materials were tested according to the following methods, and the results are shown in Table 1.

### Tests for La(110), Lc(002), and La/Lc of material:

With reference to the test method of JIS K 0131-1996, a Bruker D8 Discover X-ray diffractometer was used for testing, where a copper target was used as an anode target, and CuKα ray was used as a radiation source, with a ray wavelength λ equal to 1.5418 Å, a scanning 2θ angle range of 20° to 80°, and a scanning rate of 4°/min, to obtain an X-ray diffraction pattern of a powder sample. La(110), Lc(002), and La/Lc of the material were calculated using the following formulas.

Calculation formula for La: ${L}_{a} = \frac{K ∗ λ}{{β}_{110} ∗ cos {θ}_{110}}$.

K represents a shape factor, with a value of 1.84; λ represents a wavelength (nm); β110 represents a half peak width of the 110 crystal plane corresponding to about 43° in the X-ray diffraction pattern; and θ110 represents a diffraction angle corresponding to the 110 crystal plane in the X-ray diffraction pattern.

Calculation formula of Lc: ${L}_{c} = \frac{K ∗ λ}{{β}_{002} ∗ cos {θ}_{002}}$.

K represents a shape factor, with a value of 0.89; λ represents a wavelength (nm); β002 represents a half peak width of the 002 crystal plane corresponding to about 26° in the X-ray diffraction pattern; and θ002 represents a diffraction angle corresponding to the 002 crystal plane in the X-ray diffraction pattern.

### Test for powder OI value of material:

With reference to the lattice parameter test method of artificial graphite in JB/T 4220-2011, a Bruker D8 Discover X-ray diffractometer was used for testing, where a copper target was used as an anode target, and CuKα ray was used as a radiation source, with a ray wavelength λ equal to 1.5418 Å, a scanning 2θ angle range of 20° to 80°, and a scanning rate of 4°/min, to obtain an X-ray diffraction pattern of the material. An integral area I₀₀₄ of a diffraction peak of a 004 crystal plane of the crystalline carbon in the powder sample, and an integral area I₁₁₀ of a diffraction peak of a 110 crystal plane of the crystalline carbon in the powder sample were calculated according to the X-ray diffraction pattern. The powder OI was calculated using the formula OI value=I₀₀₄/I₁₁₀.

### Test for gram capacity of material:

The above prepared material, a conductive agent carbon black (Super P), a binder polyvinylidene fluoride (PVDF) at a mass ratio of 91.6:1.8:6.6 were mixed with a solvent N-methylpyrrolidone (NMP) uniformly to form a slurry; the prepared slurry was applied onto a surface of a negative electrode current collector copper foil; and the copper foil was dried in an oven for later use. Ethylene carbonate (EC), ethyl methyl carbonate (EMC), and diethyl carbonate (DEC) at a volume ratio of 1:1:1 were mixed to obtain an organic solvent, and then LiPF₆ was dissolved in this organic solvent to prepare an electrolyte solution with a concentration of 1 mol/L. Subsequently, a metal lithium sheet serving as a counter electrode, a polyethylene (PE) film serving as a separator, and the electrolyte solution were assembled in an argon-protected glove box to form a CR2430 button cell; and the obtained button cell was left standing for 12 h.

At 25°C, the prepared button cell was first discharged at a constant current of 0.15 mA to 0.005 V, left standing for 5 minutes, discharged at a constant current of 50 µA to 0.005 V, left standing for 5 minutes, and then discharged at a constant current of 10 µA to 0.005 V; a discharge capacity of the button cell at the first cycle was recorded; then, the button cell was charged at constant current of 0.3 mA to 2.0 V; and a charge capacity of the button cell at the first cycle was recorded. A ratio of the charge capacity to the mass of the material was the gram capacity of the material.

### Proportion X of lithium intercalation capacity of plateau relative to total capacity

A CR2430 button cell was prepared using the same method as the above gram capacity test method. After left standing for 12 h, the CR2430 button cell, at 25°C, was first discharged at a constant current of 0.15 mA to 0.005 V, left standing for 5 minutes, discharged again at a constant current of 50 µA to 0.005 V, left standing for 5 minutes, discharged again at a constant current of 10 µA to 0.005 V, and charged at a constant current of 0.3 mA to 2.0 V, to obtain a relationship between the charge and discharge capacities of the material and the voltage, that was, charge and discharge curves. A lithium intercalation capacity of a lithium intercalation plateau appearing in a range of 0.005 V to 0.070 V in the discharge curve was recorded as C1, a total lithium intercalation capacity in a range of 0.005 V to 2.0 V was recorded as C2, and proportion of lithium intercalation capacity of plateau X=C1/C2*100%.

### Test for powder compacted density of material:

A specific amount of powder was placed in a compaction-specific mold; then the mold was placed on a compacted density instrument, with a pressure set to 50000 N; a thickness of the powder under this pressure (thickness after pressure release) could be read from the device; and the compacted density was calculated using ρ=m/v.

### Test for volume-based particle size of material:

Dᵥ50 test: With reference to the particle size distribution laser diffraction method in GB/T 19077-2016, a Mastersizer 3000 laser particle size analyzer from Malvern Instruments Ltd., UK was used for testing.

(Dᵥ90-Dᵥ10)/Dᵥ50: With reference to the particle size distribution laser diffraction method in GB/T 19077-2016, a Mastersizer 3000 laser particle size analyzer from Malvern Instruments Ltd., UK was used to test the values of Dᵥ90, Dᵥ50, and Dᵥ10 respectively, to calculate the value of (Dᵥ90-Dᵥ10)/Dᵥ50.

**Table 1**

| Material No. | Raw material | | | Graphitization temperature | First artificial graphite | | | | | | |
|---|---|---|---|---|---|---|---|---|---|---|---|
| | Type | Volatile component content | Sulfur element content | | La(110) (nm) | Lc(002) (nm) | La/Lc | Value of X | Gram capacity | Powder compacted density | OI value |
| 1-1 | Oil-based calcined needle coke | 1% | 0.5% | 3020 | 131.7 | 32.5 | 4.05 | 44.1% | 360.4 | 1.97 | 10.2 |
| 1-2 | Oil-based calcined needle coke | 0.8% | 0.5% | 3100 | 155 | 33.9 | 4.57 | 44.4% | 361.1 | 1.99 | 11.4 |
| 1-3 | Oil-based calcined needle coke | 0.5% | 0.5% | 3180 | 171.9 | 32.6 | 5.27 | 44.8% | 362.6 | 2.01 | 11.9 |
| 1-4 | Oil-based calcined needle coke | 1% | 0.5% | 3150 | 166 | 30 | 5.53 | 44.8% | 361.5 | 2.01 | 9.1 |
| 1-1' | Oil-based raw needle coke | 11% | 0.5% | 2800 | 124.5 | 34.3 | 3.62 | 41.5% | 355.3 | 1.86 | 5.9 |
| 1-2' | Coal-based raw needle coke | 10% | 0.5% | 3050 | 135.7 | 29 | 4.68 | 39.4% | 350.1 | 1.80 | 7.5 |

### Preparation of second negative electrode active material

### (1) Preparation of second artificial graphite

### Material a-1

Step 1: Raw needle coke (with a sulfur content of 0.5% and a volatile component content of 5%) was crushed and shaped using a mechanical mill, and then classified using an airflow classifier to remove small particles, to obtain a shaped material.

Step 2: Graphitization was performed on the shaped material at a high temperature of 3100°C, graphitization was performed in an Acheson graphitization furnace for 36 hours, and the graphitized particles were screened and demagnetized to obtain primary particles with Dᵥ50 of 7 µm and Dᵥ1 of 3.5 µm as the second artificial graphite (material a-1).

### Materials a-2 and a-3

The preparation methods of materials a-2 and a-3 were similar to that of material a-1, except that the type of raw materials and the graphitization temperature were adjusted, and the obtained Dᵥ1, Dᵥ50, powder OI value, gram capacity, and powder compacted density of the materials a-2 and a-3 were the values shown in Table 2.

**Table 2**

| Material No. | Raw material | | Graphitization temperature | Second artificial graphite | | | | | | |
|---|---|---|---|---|---|---|---|---|---|---|
| | Type | Sulfur content | | Dᵥ1 (µm) | Dᵥ50 (µm) | La(110) (nm) | Lc(002) (nm) | Powder OI value | Gram capacity (mAh/g) | Powder compacted density (g/cc) |
| a-1 | Raw needle coke | 0.5% | 3100°C | 3.5 | 7 | 120.3 | 30.5 | 8.50 | 356 | 1.75 |
| a-2 | Raw needle coke | 0.5% | 3150°C | 3.5 | 8 | 122.5 | 30.7 | 8.65 | 356.5 | 1.84 |
| a-3 | Raw needle coke | 0.4% | 3200°C | 3.5 | 9 | 123.8 | 30.8 | 8.55 | 359 | 1.89 |

### (2) Preparation of third artificial graphite

### Material b-1

Step 1: Raw needle coke (with a sulfur content of 0.5% and a volatile component content of 5%) was crushed and shaped using an airflow mill to obtain primary particles with Dᵥ50 of 8.0 µm.

Step 2: Oily pitch with a softening point of 180°C was used as a binder and granulated together with the primary particles in a granulation kettle to obtain a granulated material, where an amount of the binder added was 10% relative to a total weight of the granulated material.

Step 3: Graphitization was performed on the granulated material at a high temperature of 3100°C for 36 hours; and the graphitized particles were screened and demagnetized to obtain secondary particles with Dᵥ50 of 14.5 µm as the third artificial graphite (material b-1).

### Materials b-2 and b-3

The preparation methods of materials b-2 and b-3 were similar to that of material b-1, except that the raw materials and the graphitization temperature of materials b-2 and b-3 were adjusted to make the Dᵥ50, powder OI value, gram capacity, and powder compacted density under a pressure of 50000 N of the materials be the values shown in Table 3.

The particle size, OI value, gram capacity, and powder compacted density of the materials were tested using the same method as that of the third artificial graphite, and the test results are recorded in Table 3.

**Table 3**

| | Raw material | | | Graphitization temperature | Granulation particle size Dᵥ50 (µm) | Third artificial graphite | | | | |
|---|---|---|---|---|---|---|---|---|---|---|
| Material No. | Type | Sulfur content | Crushing particle size Dᵥ50 (µm) | | | OI value | La(110) (nm) | Lc(002) (nm) | Gram capacity (mAh/g) | Powder compacted density (g/cc) |
| b-1 | Raw needle coke | 0.5% | 8.0 | 3100°C | 14.5 | 3.5 | 128.3 | 30.1 | 356 | 1.84 |
| b-2 | Raw needle coke | 0.5% | 8.0 | 3100°C | 13 | 4.8 | 127.8 | 29.8 | 356.5 | 1.82 |
| b-3 | Raw needle coke | 0.5% | 8.2 | 3050°C | 18 | 2.2 | 125.9 | 29.2 | 354.1 | 1.8 |

### (3) Preparation of second negative electrode active material

The second artificial graphite and the third artificial graphite were mixed according to a mass ratio shown in Table 4 below to obtain the second negative electrode active material.

The test was performed using the above test method, and the test results are shown in Table 4.

**Table 4**

| No. | Second artificial graphite A | Third artificial graphite B | Mass ratio A/B | Second negative electrode active material | | | | |
|---|---|---|---|---|---|---|---|---|
| | | | | Powder OI | Compacted density under 5 T | Dᵥ50 | (Dᵥ90-Dᵥ10)/Dᵥ50 | Gram capacity (mAh/g) |
| 2-1 | a-1 | b-1 | 25:75 | 4.4 | 1.82 | 12.6 | 1.15 | 356.0 |
| 2-2 | a-1 | b-2 | 25:75 | 5.4 | 1.79 | 11.5 | 1.25 | 356.4 |
| 2-3 | a-1 | b-3 | 25:75 | 3.4 | 1.79 | 15.3 | 0.95 | 354.6 |
| 2-4 | a-2 | b-1 | 20:80 | 4.5 | 1.84 | 13.2 | 1.18 | 356.1 |
| 2 to 5 | a-3 | b-2 | 10:90 | 5.2 | 1.85 | 12.6 | 1.28 | 356.8 |
| 2-6 | a-3 | b-3 | 30:70 | 4.1 | 1.80 | 15.3 | 1.05 | 355.6 |

### Example 1

### (1) Preparation of first negative electrode active material slurry

The first negative electrode active material, a conductive agent Super P, a thickener sodium carboxymethyl cellulose, and a binder styrene-butadiene rubber at a weight ratio of 96.6:0.80:1.0:1.6 were fully stirred and mixed in an appropriate amount of solvent deionized water, to form the first negative electrode active material slurry.

### (2) Preparation of second negative electrode active material slurry

The second negative electrode active material, a conductive agent Super P, a thickener sodium carboxymethyl cellulose, and a binder styrene-butadiene rubber at a weight ratio of 97.4:1:0.7:0.9 were fully stirred and mixed in an appropriate amount of solvent deionized water, to form the first negative electrode active material slurry.

### (3) Preparation of negative electrode sheet

A dual-cavity coating device was used to simultaneously extrude out the first negative electrode active material slurry and the second negative electrode active material slurry, where a mass ratio of the first negative electrode active material slurry to the second negative electrode active material slurry was 1:1. The first negative electrode active material slurry was applied onto a negative electrode current collector copper foil, to be specific, the first negative electrode active material slurry was applied onto a first region. The second negative electrode active material slurry was applied onto the first negative electrode active material slurry, to be specific, the second negative electrode active material slurry was applied onto a second region. After drying and cold pressing, the negative electrode sheet was obtained.

### (4) Preparation of positive electrode sheet

Lithium iron phosphate, conductive carbon black and PVDF at a mass ratio of 96.2:2:1.8 were mixed, added with a solvent N-methylpyrrolidone, and then stirred uniformly to obtain a positive electrode slurry. The positive electrode slurry was applied onto two surfaces of a positive electrode current collector aluminum foil, followed by drying and cold pressing, to obtain the positive electrode sheet.

### (5) Preparation of lithium-ion battery

A 7 µm polyethylene film was used as a separator, a PVDF slurry was sprayed onto two sides of the separator, a 1 µm alumina ceramic coating was sprayed onto one side, and the surface with the ceramic coating corresponds to a cathode sheet.

Ethylene carbonate (EC), ethyl methyl carbonate (EMC), and diethyl carbonate (DEC) at a volume ratio of 1:1:1 were mixed to obtain an organic solvent, then LiPF₆ was dissolved in this organic solvent to prepare an electrolyte solution with a concentration of 1 mol/L.

The prepared positive electrode sheet and negative electrode sheet were placed in order, with the separator located between the positive electrode sheet and negative electrode sheet for isolation, and then wound to obtain an electrode assembly; the electrode assembly was placed in an outer package; and after drying, the electrolyte solution was injected, followed by the processes such as vacuum sealing, standing, formation, and shaping, to obtain a secondary battery.

### Examples 2 to 4

The battery preparation methods of Examples 2 to 4 were similar to that of Example 1, except that in the preparation step of the negative electrode sheet, the types of the first negative electrode active material and the second negative electrode active material were adjusted as shown in Table 5.

### Comparative Example 1

The battery preparation method of Comparative Example 1 was similar to that of Example 1, except that in the preparation step of the negative electrode sheet, the second negative electrode active material slurry was applied onto the first region, and the first negative electrode active material slurry was applied onto the second region.

### Comparative Example 2

The battery preparation method of Comparative Example 2 was similar to that of Example 1, except that in the preparation step of the negative electrode sheet, the first negative electrode active material and the second negative electrode active material were mixed and then applied onto the negative electrode current collector to form a single negative electrode film layer.

### Comparative Example 3

The battery preparation method of Comparative Example 3 was similar to that of Example 1, except that in the preparation step of the negative electrode sheet, only the first negative electrode active material 1-1 was used to form a single negative electrode film layer on the negative electrode current collector.

### Comparative Example 4

The battery preparation method of Comparative Example 4 was similar to that of Example 1, except that in the preparation step of the negative electrode sheet, only the second negative electrode active material 2-1 was used to form a single negative electrode film layer on the negative electrode current collector.

### Comparative Examples 5 and 6

The battery preparation methods of Comparative Examples 5 and 6 were similar to that of Example 1, except that in the preparation step of the negative electrode sheet, the types of the first negative electrode active material and the second negative electrode active material were adjusted as shown in Table 5.

### Performance test

### (1) Energy density

At 25°C, the secondary battery was charged at a constant current of 1/3C to 3.65 V, then charged at a constant voltage of 3.65 V until the current was 0.05C, left standing for 5 min, and then discharged at a constant current of 1/3C to 2.5 V; and discharge energy of the battery at that moment was recorded. The discharge energy of the battery was divided by the weight of the battery to obtain the weight energy density of the battery, measured in Wh/kg. The measurement data are specifically shown in Table 5.

### (2) Fast charging performance test of secondary battery

At 25°C, the secondary battery was charged at a constant current of 0.33C to 3.65 V, then charged at constant voltage until the current was 0.05C, left standing for 5 min, and then discharged at a constant current of 0.33C to 2.0 V; and an actual capacity of the secondary battery was recorded as C0.

Subsequently, the secondary battery was sequentially charged at a constant current of 1.0C0, 1.3C0, 1.5C0, 1.8C0, 2.0C0, 2.3C0, 2.5C0, and 3.0C0 to a negative electrode cutoff potential of 3.65 V or 0 V (whichever was reached first). After each charge was completed, the secondary battery needed to be discharged at 1C0 to 2.0 V. The negative electrode potentials corresponding to 10% SOC, 20% SOC, 30% SOC, ..., and 80% SOC (State of Charge, state of charge) to which the battery was charged under different charging rates were recorded, and a charging rate-negative electrode potential curve under different SOC states was drawn. After linear fitting, charging rates corresponding to the negative electrode potential of 0 V under different SOC states were obtained, and these charging rates were charging windows under these SOC states, which were recorded as C10% SOC, C20% SOC, C30% SOC, C40% SOC, C50% SOC, C60% SOC, C70% SOC, and C80% SOC respectively. A charging time T for the secondary battery to be charged from 10% SOC to 80% SOC (under the premise that no lithium precipitation occurred in the secondary battery) was calculated according to the following formula, measured in min. A shorter charging time indicates better kinetic performance of the secondary battery: 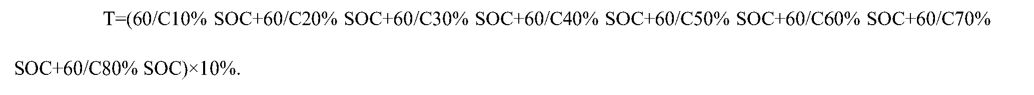 T = (60/C10% SOC + 60/C20% SOC + 60/C30% SOC + 60/C40% SOC + 60/C50% SOC + 60/C60% SOC + 60/C70% SOC + 60/C80% SOC) × 10%.

### (3) Cycling performance test of secondary battery

At 45°C, the secondary battery was charged at a constant current of 1C to an upper limit of 3.65 V (corresponding to 100% SOC), then charged at a constant voltage until the current was 0.05C, left standing for 5 min, and then discharged at a constant current of 1C to 2.5 V (corresponding to 0% SOC); and a discharge capacity at that moment was recorded, which was the discharge capacity at the first cycle. The secondary battery was subjected to a charge-discharge cycling test according to this method, and a discharge capacity after each cycle was recorded. 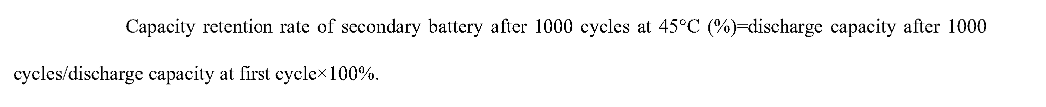Capacity retention rate of secondary battery after 1000 cycles at 45°C (%) = discharge capacity after 1000 cycles/discharge capacity at first cycle × 100%.

The secondary batteries prepared in the above examples and comparative examples were subjected to performance tests, and the results are shown in Table 5.

**Table 5**

| No. | First region | | Second region | Mass ratio of first negative electrode material to second negative electrode material | Secondary battery performance | | |
|---|---|---|---|---|---|---|---|
| | First negative electrode material | | Second negative electrode material | | Energy density (Wh/kg) | Fast charging performance (min) | Capacity retention rate after 1000 cycles at 45°C |
| Example 1 | 1-1 | | 2-1 | 5:5 | 190.5 | 23.1 | 87.40% |
| Example 2 | 1-2 | | 2-1 | 5:5 | 190.8 | 23.2 | 87.60% |
| Example 3 | 1-3 | | 2-1 | 5:5 | 191.0 | 22.7 | 87.70% |
| Example 4 | 1-4 | | 2-1 | 5:5 | 190.9 | 23.3 | 87.80% |
| Comparative Example 1 | 2-1 | | 1-1 | 5:5 | 180.2 | 30.2 | 82.10% |
| Comparative Example 2 | Single film layer: with materials 2-1 and 1-1 mixed physically | | | 5:5 | 183.8 | 28.9 | 84.10% |
| Comparative Example 3 | Single film layer: with only material 1-1 | | | 100:0 | 188.4 | 31.9 | 82.90% |
| Comparative Example 4 | Single film layer: with only material 2-1 | | | 0:100 | 170 | 24 | 83.60% |
| Comparative Example 5 | 1-1' | 2-1 | | 5:5 | 174.2 | 26.8 | 83.10% |
| Comparative Example 6 | 1-2' | 2-1 | | 5:5 | 171.1 | 25.6 | 83.50% |

It can be seen from the data in Table 5 that as compared with Comparative Examples 1 to 6, in the negative electrode sheets prepared in the examples of this disclosure, there are two negative electrode film layers, the first region uses the first negative electrode active material with high energy density, and the second region uses the second negative electrode active material with high isotropy and high powder compacted density. Thus, the secondary battery can achieve high energy density, excellent kinetic performance, and high cycling performance.

### Examples 5 to 11

The battery preparation methods of Examples 5 to 11 were similar to that of Example 1, except that in the preparation step of the negative electrode sheet, the type of the second negative electrode active material and the mass ratio of the first negative electrode active material to the second negative electrode active material were adjusted as shown in Table 6.

The secondary batteries prepared in the above examples were subjected to performance tests, and the results are shown in Table 6.

**Table 6**

| No. | First region | Second region | Mass ratio of first negative electrode material to second negative electrode material | Secondary battery performance | | |
|---|---|---|---|---|---|---|
| | First negative electrode material | Second negative electrode material | | Energy density (Wh/kg) | Fast charging performance (min) | Capacity retention rate after 1000 cycles at 45°C |
| Example 5 | 1-3 | 2-1 | 6:4 | 191.2 | 22.9 | 87.60% |
| Example 6 | 1-3 | 2-1 | 3:7 | 189.7 | 22.5 | 88.10% |
| Example 7 | 1-3 | 2-2 | 5:5 | 190.8 | 23.8 | 87.70% |
| Example 8 | 1-3 | 2-3 | 5:5 | 188.9 | 23 | 87.90% |
| Example 9 | 1-3 | 2-4 | 5:5 | 190.7 | 23.4 | 87.80% |
| Example 10 | 1-3 | 2-5 | 5:5 | 191.1 | 23.6 | 87.20% |
| Example 11 | 1-3 | 2-6 | 5:5 | 190.5 | 23.2 | 87.50% |

It can be seen from the data in Table 6 that the secondary batteries prepared in the examples of this disclosure can achieve high energy density, excellent kinetic performance, and high cycling performance.

It should be noted that this disclosure is not limited to the above embodiments. The above embodiments are only examples, and any embodiments having substantially the same configuration as the technical ideas and achieving the same effects within the scope of the technical solutions of this disclosure are included in the technical scope of this disclosure. In addition, various modifications that can be conceived by those skilled in the art within the scope without departing from the gist of this disclosure, and other forms constructed by combining some constituent elements of the embodiments, are also included in the scope of this disclosure.

## Claims

1. A secondary battery, comprising a negative electrode sheet, wherein the negative electrode sheet comprises a negative electrode current collector and a negative electrode film layer formed on at least one surface of the negative electrode current collector; the negative electrode film layer comprises a first region and a second region; the first region is located between the second region and the negative electrode current collector; the first region comprises a first negative electrode active material; the second region comprises a second negative electrode active material; a powder OI value of the second negative electrode active material is less than a powder OI value of the first negative electrode active material; and the first negative electrode active material comprises first artificial graphite, wherein La(110) of the first artificial graphite is 130 nm to 175 nm, Lc(002) is 30 nm to 42 nm, La(110) represents a crystallite size along axis a in a (110) crystal plane of the first artificial graphite, and Lc(002) represents a crystallite size along axis c in a (002) crystal plane of the first artificial graphite.

2. The secondary battery according to claim 1, wherein La(110) of the first artificial graphite is 132 nm to 172 nm, and/or Lc(002) is 30 nm to 36 nm.

3. The secondary battery according to claim 1 or 2, wherein La(110)/Lc(002) is 3.5 to 5.5.

4. The secondary battery according to any one of claims 1 to 3, wherein La(110)/Lc(002) is 4.5 to 5.5.

5. The secondary battery according to any one of claims 1 to 4, wherein under conditions of a lithium deintercalation rate of 0.1C and a lithium intercalation rate of 0.05C, a button cell prepared from the first artificial graphite is subjected to a charge-discharge test to obtain charge and discharge curves in a range of 0.005 V to 2.0 V; and in the discharge curve, a lithium intercalation plateau is present in a voltage range of 0.005 V to 0.070 V, and a proportion X of a discharge capacity corresponding to the lithium intercalation plateau relative to a total discharge capacity of the button cell is 43% or higher.

6. The secondary battery according to claim 5, wherein the proportion X of the discharge capacity corresponding to the lithium intercalation plateau relative to the total discharge capacity of the button cell is 43% to 47%.

7. The secondary battery according to any one of claims 1 to 6, wherein a gram capacity of the first negative electrode active material is greater than or equal to a gram capacity of the second negative electrode active material.

8. The secondary battery according to any one of claims 1 to 7, wherein a gram capacity of the first negative electrode active material is greater than or equal to 359 mAh/g; and/or
a gram capacity of the second negative electrode active material is 353 mAh/g to 359 mAh/g.

9. The secondary battery according to any one of claims 1 to 8, wherein a gram capacity of the first negative electrode active material is 359 mAh/g to 366 mAh/g; and/or
a gram capacity of the second negative electrode active material is 354.6 mAh/g to 356.8 mAh/g.

10. The secondary battery according to any one of claims 1 to 9, wherein a graphitization degree of the first negative electrode active material is greater than a graphitization degree of the second negative electrode active material.

11. The secondary battery according to any one of claims 1 to 10, wherein a graphitization degree of the first negative electrode active material is 94.0% to 96.0%; and/or
a graphitization degree of the second negative electrode active material is 93.5% to 95.5%.

12. The secondary battery according to any one of claims 1 to 11, wherein a graphitization degree of the first negative electrode active material is 94.2% to 95.8%; and/or
a graphitization degree of the second negative electrode active material is 93.7% to 95.3%.

13. The secondary battery according to any one of claims 1 to 12, wherein a powder compacted density of the first negative electrode active material under a pressure of 50000 N is greater than a powder compacted density of the second negative electrode active material under a pressure of 50000 N.

14. The secondary battery according to any one of claims 1 to 13, wherein a powder compacted density of the first negative electrode active material under a pressure of 50000 N is 1.95 g/cc to 2.04 g/cc; and/or
a powder compacted density of the second negative electrode active material under a pressure of 50000 N is 1.75 g/cc to 1.94 g/cc.

15. The secondary battery according to any one of claims 1 to 14, wherein the first artificial graphite comprises secondary particles.

16. The secondary battery according to any one of claims 1 to 15, wherein the powder OI value of the first negative electrode active material is 5.0 to 20.5; and/or
the powder OI value of the second negative electrode active material is 2.5 to 6.5.

17. The secondary battery according to any one of claims 1 to 16, wherein the powder OI value of the first negative electrode active material is 5.5 to 19.5; and/or
the OI value of the second negative electrode active material is 2.8 to 6.3.

18. The secondary battery according to any one of claims 1 to 17, wherein a volume-based particle size Dᵥ50 of the second negative electrode active material is 10.0 µm to 15.5 µm; and/or
a particle size distribution (Dᵥ90-Dᵥ10)/Dᵥ50 of the second negative electrode active material is 0.95 to 1.3.

19. The secondary battery according to any one of claims 1 to 18, wherein a volume-based particle size Dᵥ50 of the second negative electrode active material is 11.0 µm to 14.5 µm; and/or
a particle size distribution (Dᵥ90-Dᵥ10)/Dᵥ50 of the second negative electrode active material is 0.95 to 1.25.

20. The secondary battery according to any one of claims 1 to 19, wherein in the second negative electrode active material, a volume distribution proportion of particles having a particle size greater than 6.5 µm and less than 22.5 µm is greater than or equal to 75%.

21. The secondary battery according to any one of claims 1 to 20, wherein in the second negative electrode active material, a volume distribution proportion of particles having a particle size greater than 6.5 µm and less than 22.5 µm is 75% to 90%.

22. The secondary battery according to any one of claims 1 to 21, wherein the second negative electrode active material comprises second artificial graphite and third artificial graphite, the second artificial graphite comprises primary particles, and the third artificial graphite comprises secondary particles.

23. The secondary battery according to claim 22, wherein in the second negative electrode active material, a mass ratio of the second artificial graphite to the third artificial graphite is 1:9 to 3:7.

24. The secondary battery according to claim 22 or 23, wherein in the second negative electrode active material, a mass ratio of the second artificial graphite to the third artificial graphite is 1:9 to 1:3.

25. The secondary battery according to any one of claims 22 to 24, wherein La(110) of the first artificial graphite is greater than La(110) of the second artificial graphite, and La(110) of the first artificial graphite is greater than La(110) of the third artificial graphite.

26. The secondary battery according to any one of claims 22 to 25, wherein La(110) of the second artificial graphite is 100 nm to 140 nm, and Lc(002) is 25 nm to 32 nm.

27. The secondary battery according to any one of claims 22 to 26, wherein La(110) of the third artificial graphite is 90 nm to 130 nm, and Lc(002) is 26 nm to 34 nm.

28. The secondary battery according to any one of claims 22 to 27, wherein
a volume-based particle size Dᵥ50 of the second artificial graphite is 7 µm to 9 µm, and Dᵥ1 is 3 µm to 5.5 µm; and/or
a volume-based particle size Dᵥ50 of the third artificial graphite is 13 µm to 18 µm.

29. The secondary battery according to any one of claims 22 to 28, wherein
a powder OI value of the second artificial graphite is 7 to 10; and/or
a powder OI value of the third artificial graphite is 2 to 5.

30. The secondary battery according to any one of claims 22 to 29, wherein
a gram capacity of the second artificial graphite is 354.1 mAh/g to 359.6 mAh/g; and/or
a gram capacity of the third artificial graphite is 353.0 mAh/g to 358.2 mAh/g.

31. The secondary battery according to any one of claims 22 to 30, wherein
a powder compacted density of the second artificial graphite under a pressure of 50000 N is 1.72 g/cc to 1.92 g/cc; and/or
a powder compacted density of the third artificial graphite under a pressure of 50000 N is 1.75 g/cc to 1.95 g/cc.

32. The secondary battery according to any one of claims 1 to 31, wherein the first artificial graphite satisfies one or more of the following conditions:
(1) a volume-based particle size Dᵥ50 of the first artificial graphite is 14.5 µm to 18.0 µm;
(2) a particle size distribution (Dᵥ90-Dᵥ10)/Dᵥ50 of the first artificial graphite is 0.90 to 1.25; and
(3) a specific surface area of the first artificial graphite is 0.8 m²/g to 2.1 m²/g.

33. The secondary battery according to any one of claims 1 to 32, wherein the first artificial graphite satisfies at least one or more of the following conditions:
(1) a volume-based particle size Dᵥ50 of the first artificial graphite is 15.0 µm to 17.5 µm;
(2) a particle size distribution (Dᵥ90-Dᵥ10)/Dᵥ50 of the first artificial graphite is 0.90 to 1.20; and
(3) a specific surface area of the first artificial graphite is 1.0 m²/g to 1.9 m²/g.

34. The secondary battery according to any one of claims 1 to 33, wherein the first negative electrode material and/or the second negative electrode active material further comprises silicon.

35. An electric apparatus, comprising the secondary battery according to any one of claims 1 to 34.
